# EUROPÄISCHE PATENTSCHRIFT

(11) **EP 1 519 853 B1**
(45) Veröffentlichungstag und Bekanntmachung des Hinweises auf die Patenterteilung: **20.09.2006**
(21) Anmeldenummer: 03763608.1
(22) Anmeldetag: 09.07.2003
(51) Int. Cl.: B60N 2/42, B60N 2/427, B60R 22/195

(54) **SICHERHEITSVORRICHTUNG FÜR EINEN KRAFTFAHRZEUGSITZ**
SAFETY DEVICE FOR A MOTOR VEHICLE SEAT
DISPOSITIF DE SECURITE POUR SIEGE DE VEHICULE AUTOMOBILE

(30) Priorität: 10.07.2002 DE 10231794
(43) Veröffentlichungstag der Anmeldung: 06.04.2005
(73) Patentinhaber: TAKATA CORPORATION, Minato-ku, Tokyo 106-8510 (JP); Takata-Petri AG, 63743 Aschaffenburg (DE)
(72) Erfinder: SAIGUCHI, Ryoji, Yokohama City, Kanagawa 223-0064 (JP); AL SAMARAE, Sami, 13187 Berlin (DE); DAHER, Mohammed, 14059 Berlin (DE)
(74) Vertreter: Baumgärtel, Gunnar
(86) Internationale Anmeldenummer: PCT/DE2003/002383
(87) Internationale Veröffentlichungsnummer: WO 2004/007237

(56) Entgegenhaltungen:
- EP-A- 0 965 479
- EP-A- 1 067 015
- EP-A- 1 245 437
- WO-A-01/19641
- DE-A- 10 011 819
- DE-A- 10 065 464
- DE-A- 19 504 975
- DE-U- 29 610 078
- FR-A- 2 747 081
- GB-A- 1 348 873
- GB-A- 2 323 336
- US-A- 4 225 178

## Beschreibung

Die Erfindung betrifft eine Sicherheitsvorrichtung für einen Kraftfahrzeugsitz mit den Merkmalen des Oberbegriffs des Anspruchs 1.

Eine derartige Sicherheitsvorrichtung weist eine Sitzfläche auf, die typischerweise durch ein Sitzpolster gebildet wird und auf die sich eine den entsprechenden Kraftfahrzeugsitz benutzende Person setzen kann, sowie ein der Sitzfläche zugeordnetes, beweglich gelagertes (verstellbares) Sicherungselement das mit einer in einem Crash-Fall aktivierbaren Antriebseinrichtung aus einer Ausgangslage heraus derart bewegbar ist, dass es gemeinsam mit der Sitzfläche der Vorverlagerung des Beckens einer auf der Sitzfläche sitzenden Person in Sitzlängsrichtung entgegen wirkt. Die Sitzfläche erstreckt sich dabei entlang einer Sitzlängsrichtung, die im eingebauten Zustand des Sitzes in ein Kraftfahrzeug z.B. im wesentlichen der Fahrzeuglängsachse (Fahrtrichtung eines Kraftfahrzeugs) entspricht

Die Sitzfläche bildet dabei zum einen einen Bestandteil des Kraftfahrzeugsitzes, dem die Sicherheitsvorrichtung zugeordnet ist; sie bildet jedoch gleichzeitig auch einen Bestandteil der Sicherheitsvorrichtung selbst, da sie gemeinsam mit dem Sicherungselement die Vorverlagerung des Beckens einer auf der Sitzfläche sitzenden Person begrenzen soll. Hierzu wird das Sicherungselement mittels der Antriebseinrichtung näher an die Sitzfläche (des Sitzpolsters) herangeführt, wobei es gegebenenfalls auch zu einer gewissen Deformation der Sitzfläche kommen kann. Allerdings wird hierbei nicht die räumliche Lage der Sitzfläche als Ganzes (etwa durch Verschwenken der Sitzfläche) verändert.

Durch das Zusammenwirken des aus seiner Ausgangslage heraus bewegten Sicherungselementes und der Sitzfläche soll verhindert werden, dass eine mit einem Sicherheitsgurt des entsprechenden Fahrzeugsitzes angegurtete Person bei einer Crashbedingten Vorverlagerung unter dem Sicherheitsgurt, speziell dessen Beckengurt, hindurchtaucht. Dieser Effekt wird in Fachkreisen englischsprachig auch als "submarining" bezeichnet.

Um das Vorverlagem des Beckens in Sitzlängsrichtung einer auf der Sitzfläche sitzenden Person im Crash-Fall entgegenzuwirken, ist aus dem Stand der Technik eine Reihe konkreter Lösungen bekannt. Allen diesen Lösungen ist gemeinsam, dass im Bereich der Sitzfläche des Kraftfahrzeugsitzes in oder kurz vor einem Crash-Fall ein Sicherungselement derart zur Sitzfläche bewegt wird, dass Sicherungselement und Sitzfläche die Vorwärtsbewegung in Sitzlängsrichtung des Beckens eines Fahrzeuginsassens begrenzen bzw, nur innerhalb eines kontrollierten Bereichs zulassen.

Ein derartiger Kraftfahrzeugsitz ist beispielsweise aus der DE 100 11819 A1 bekannt. Dort wird das Sicherungselement mittels eines pyrotechnischen Antriebs im Crash-Fall in Richtung der Sitzfläche des Kraftfahrzeugsitzes bewegt.

Nicht alle Kollisionen von Kraftfahrzeugen im Straßenverkehr haben einen Totalschaden des Fahrzeuges zur Folge. Daher existieren eine Vielzahl von Verkehrsunfällen mit einer Kollision, in deren Verlauf die Bewegung des Sicherungselementes aus der Ausgangslage aktiviert wird und das Fahrzeug Schäden in einem solchen Umfange aufweist, dass eine Reparatur der am Fahrzeug aufgetretenen Schäden noch lohnend ist. Weiterhin ist denkbar, dass eine drohende aber letztlich abgewendete Kollision durch eine im Fahrzeug vorhandene Pre-Crash-Sensorik detektiert wird und die Bewegung des Sicherungselements aus der Ausgangslage aktiviert. In derartigen Fällen weist der aus der vorangehend genannten Druckschrift bekannte Kraftfahrzeugsitz den Nachteil auf, dass im Rahmen der Reparatur des Fahrzeugs insbesondere die pyrotechnische Antriebseinrichtung des Sicherungselementes des Kraftfahrzeugsitzes ausgetauscht werden muss. Dies hat zusätzliche Reparaturkosten zur Folge.

Der vorliegenden Erfindung liegt daher die Aufgabe zugrunde, eine einfach aufgebaute Sicherheitsvorrichtung für einen Kraftfahrzeugsitz bereitzustellen, die dem Vorverlagern des Beckens einer auf dem Kraftfahrzeugsitz sitzenden Person in einem Crash-Fall auf kostengünstige Weise entgegenwirkt, ohne dabei die vorangehend genannten Nachteile aufzuweisen.

Diese Aufgabe wird durch eine Sicherheitsvorrichtung mit den Merkmalen des Anspruchs 1 gelöst.

Erfindungsgemäß ist vorgesehen, dass die Antriebseinrichtung der Sicherheitsvorrichtung Mittel zum Rückführen des Sicherungselementes in die Ausgangslage aufweist und die Antriebseinrichtung nach dem Rückführen des Sicherungselementes in die Ausgangslage ein erneutes Bewegen des Sicherungselementes in einem erneuten Crash-Fall gewährleistet.

Es wird also ein Kraftfahrzeugsitz bereitgestellt, bei dem die in einem Crash-Fall ausgelöste Bewegung des Sicherungselementes, die im folgenden auch als Zustellbewegung bezeichnet wird, reversibel ist. Das heißt, dass sich die Bewegung des Sicherungselementes aus der Ausgangslage nach einem ersten Crash-Fall rückgängig machen lässt und zusätzlich die Sicherheitsvorrichtung In einem zweiten Crash-Fall die Bewegung des Sicherungselementes aus der Ausgangslage erneut bereitstellt.

Dies hat den Vorteil, dass es ohne den Austausch von Bauelementen der Antriebseinrichtung des Sicherungselementes bei Bedarf auf einfache Weise möglich ist, den Kraftfahrzeugsitz mit dem Sicherungselement und der Antriebseinrichtung nach einem Crash-Fall wieder in den ursprünglichen Zustand zurückzuversetzen.

Unter einem Crash-Fall wird sowohl eine tatsächlich eintretende Kollision als auch eine drohende, dann aber abgewendete Kollision eines Kraftfahrzeuges verstanden. Die zweite Variante spielt insbesondere bei Kraftfahrzeugen eine Rolle, deren Sicherheitssystem eine Sensorik zum Erkennen drohender Kollisionen aufweist (Pre-Crash-Sensorik).

Die erfindungsgemäße Sicherheitsvorrichtung eignet sich in besonderer Weise dazu, bei einer mit einem Sicherheitsgurt auf dem Fahrzeugsitz angeschnallten Person ein Durchrutschen des Beckens der Person in Sitzlängsrichtung unter einem im Bereich des Beckens angeordneten Abschnitt des Sicherheitsgurtes hindurch entgegenzuwirken.

Die Antriebseinrichtung weist bevorzugt eine lösbare Sperre auf, die eine Rückführbewegung des Sicherungselementes in die Ausgangslage sperrt. Die lösbare Sperre hat dabei die Funktion, zu verhindern, dass während eines Crash-Falles auf das Sicherungselement einwirkende Kräfte das Sicherungselement in Richtung der Ausgangslage zurückbewegen. Nach dem Crash-Fall lässt sich die Sperre lösen, um das Sicherungselement mittels der Antriebseinrichtung wieder in die Ausgangslage zurückzubewegen.

In einer bevorzugten Variante der Sicherheitsvorrichtung umfassen die Mittel zum Rückführen des Sicherungselements In die Ausgangslage eine Federeinrichtung. Diese Federeinrichtung ist derart angeordnet, dass das Sicherungselement die Federeinrichtung während der Zustellbewegung des Sicherungselementes mit einer Kraft beaufschlagt. Nach dem Crash-Fall lässt sich die Sperre am Sicherungselement lösen, damit die Federkraft der Federeinrichtung das Sicherungselement in die Ausgangslage zurückbewegt. Bei dieser Ausführungsform des Kraftfahrzeugsitzes weist die Antriebseinrichtung bevorzugt eine Motoreinrichtung für die Zustellbewegung des Sicherungselementes in einem Crash-Fall auf. Als Motoren für eine Motorvorrichtung eigenen sich sämtliche Arten von Elektromotoren, insbesondere auch Elektromotoren zur Erzeugung einer linearen Bewegung.

In einer zweiten Variante der Erfindung sind die Mittel zum Zurückführen des Sicherungselementes in die Ausgangslage in Form einer Motorvorrichtung ausgebildet und die Antriebseinrichtung weist ein Federelement für die Zustellbewegung des Sicherungselementes in einem Crash-Fall auf. Das Federelement ist dabei in der Ausgangslage des Sicherungselementes vorgespannt und durch eine Halteeinrichtung gesichert. In einem Crash-Fall wird das Federelement durch die Halteeinrichtung ausgelöst, und die Federkraft des Federelementes setzt sich in die Zustellbewegung des Sicherungselementes um. Nach dem Crash-Fall lässt sich das Sicherungselement durch das Aktivieren der Motorvorrichtung zurück in die Ausgangslage führen, wobei das Federelement wieder vorgespannt und mittels der Halteeinrichtung gesichert wird.

In einer dritten Variante dient die Motorvorrichtung der Antriebseinrichtung sowohl dazu, das Sicherungselement in einem Crash-Fall aus der Ausgangslage in der Zustellbewegung herauszubewegen als auch dazu, das Sicherungselement nach dem Crash-Fall in die Ausgangslage zurückzuführen. Die Motorvorrichtung dient somit sowohl als Mittel zum Rückführen des Sicherungselementes als auch als Mittel für die Zustellbewegung des Slcherungselementes. Eine zusätzliche Haltevorrichtung wie bei der zweiten Variante des Kraftfahrzeugsitzes ist nicht erfordertich.

Bei jeder der drei vorangehenden Efindungsvarianten weist die Antriebseinrichtung bevorzugt ein Getriebe zur Kraftübertragung und gegebenenfalls -übersetzung zwischen Motorvorrichtung und dem Sicherungselement auf.

Bei dem Getriebe kann es sich beispielsweise handeln um ein Zahngetriebe (unter Einschluss von Zahnstangen- und Zahnriemengetrieben), um ein Spindelgetriebe, um ein Hebelgetriebe, um ein Riemengetriebe oder um ein Getriebe unter Verwendung eines flexiblen Zugmittels.

Das Sicherungselement erstreckt sich bevorzugt unterhalb einer Polsterung der Sitzfläche im Wesentlichen senkrecht zur Sitzlängsrichtung. Insbesondere lässt sich das Sicherungselement dabei auf einer Sitzschale des Sitzteils anordnen. Dadurch kann das Sicherungselement in einem Crash-Fall auf einfache Weise in Richtung der Sitzfläche bewegt werden, so dass Sitzfläche und Sicherungselement eine im Wesentlichen entlang der Erstreckungsrichtung des Sicherungselementes wirksame Schwelle bilden, die dem Vorverlagern des Beckens einer auf dem Kraftfahrzeugsitz sitzenden Person entlang der gesamten Breite der Sitzfläche entgegenwirkt.

Das Sicherungselement weist hierzu vorzugsweise einen Verstellabschnitt auf, der bei der Zustellbewegung des Sicherungselementes in eine solche Position gebracht wird, dass er (zusammen mit der Sitzfläche) die Vorverlagerung des Beckens einer auf der entsprechenden Sitzfläche sitzenden Person begrenzt

Ferner weist das Sicherungselement mindestens einen Abschnitt, z. B. in Form eines Endabschnittes, auf, über den das Sicherungselement entlang seiner Bewegungsrichtung geführt ist und an dem gegebenenfalls auch die Antriebseinrichtung angreifen kann.

Die Zustellbewegung des Sicherungselementes in einem Crash-Fall kann als Translation, als Rotation oder als eine Kombination einer Translation mit einer Rotation ausgebildet sein. Alle drei Varianten der Zustellbewegung haben gemeinsam, dass sich das Sicherungselement in Richtung des Beckens der auf der Sitzfläche des Kraftfahrzeugsitzes sitzenden Person bewegt.

In einer ersten vorteilhaften Ausführungsform bewegt sich das Sicherungselement in einem Crash-Fall rein translatorisch. Dabei ist das Sicherungselement im Wesentlichen strangförmig ausgebildet. Der Kraftfahrzeugsitz weist an dessen Seitenbereichen gegenüberliegend angeordnete Führungsstrukturen auf, die die beiden Endabschnitte des strangförmigen Sicherungselementes aufnehmen und zur Führung der translatorischen Zustellbewegung dienen. An jedem Endabschnitt des strangförmigen Sicherungselementes ist bevorzugt eine Motorvorrichtung angeordnet. Diese Motorvorrichtung dient bei der ersten Variante des Kraftfahrzeugsüzes ausschließlich zur Realisierung der Zustellbewegung; für die Rückführbewegung in die Ausgangslage ist dann eine Federeinrichtung vorgesehen. Bei der umgekehrt ausgebildeten zweiten Variante realisiert ein Federelement die Zustellbewegung und die Motorvorrichtung dient der Rückführung des Sicherungselementes. Bei der dritten Variante dient die Motorvorrichtung sowohl zur Realisierung der Zustellbewegung als auch zum Rückführen des Sicherungselementes in die Ausgangslage.

In einer weiteren bevorzugten Ausführungsform ist eine rotatorische Zustellbewegung des Sicherungselementes vorgesehen. Dabei ist das Sicherungselement bügelförmig ausgebildet. Zwischen den beiden Endabschnitten des bügelförmigen Sicherungselementes kann insbesondere ein geradliniger Schwenkabschnitt vorgesehen sein. Das bügelförmige Sicherungselement ist mit beiden Endabschnitten schwenkbar an den Seitenbereichen des Fahrzeugsitzes angelenkt, um die rotatorische Zustellbewegung des Sicherungselementes in einem Crash-Fall zu ermöglichen. Der geradlinige Schwenkbereich des Sicherungselementes wirkt bei der Zustellbewegung derart auf die Sitzfläche ein, dass sich an der Sitzfläche die Schwelle ausbildet, die dem Vorverlagern des Beckens einer auf dem Kraftfahrzeugsitz sitzenden Person entgegenwirkt.

Dabei ist im Bereich mindestens eines Endabschnittes des bügelförmigen Sicherungselementes eine Motorvorrichtung angeordnet. Diese Motorvorrichtung dient wie vorangehenden bei der translatorischen Zustellbewegung beschrieben zur Realisierung der Zustellbewegung des Sicherungselementes und/oder zum Rückführen des Sicherungselementes in die Ausgangslage. Für die Varianten, in denen die Motorvorrichtung nur zur Zustellung oder Rückführung des Sicherungselementes dient ist, ist entsprechend ein Federelement bzw. eine Federeinrichtung für die jeweils andere Bewegung vorgesehen.

Eine weitere bevorzugte Ausführungsform des Kraftfahrzeugsitzes ist dadurch gekennzeichnet, dass die Antriebseinrichtung ein strangförmiges Zugmittel aufweist und das Sicherungselement mittels des strangförmigen Zugmittels mit der Motorvorrichtung in Wirkverbindung steht. Das strangförmige Zugmittel dient dabei zur Kraftübertragung der durch die Motorvorrichtung ausgeübten Kraft auf das Sicherungselement. Als strangförmiges Zugmittel lässt sich insbesondere ein Bowdenzug oder ein Kunststoffstrang mit geringer Eigendehnung einsetzen.

Aufgrund der geometrischen Einbaubedingungen am Kraftfahrzeugsitz kann es vorteilhaft sein, das strangförmige Zugmittel zwischen Sicherungselement und Motorvorrichtung über mindestens ein Umlenkelement zu führen. Als Umlenkelement ist beispielsweise eine Umlenkrolle verwendbar.

Eine weitere vorteilhafte Ausführungsform der Erfindung weist ein zweites strangförmiges Zugmittel auf, das zwischen der Motorvorrichtung und einem Endabschnitt eines am Kraftfahrzeugsitz vorgesehenen Beckengurtes derart angeordnet ist, dass die Motorvorrichtung in einem Crash-Fall während der Bewegung des Sicherungselementes eine Straffung des Beckengurtes zur Sitzfläche hin realisiert. Diese Ausführungsform integriert auf einfache und kostengünstige Weise die Funktion eines Gurtstraffers.

Die strangförmigen Zugmittel der Ausführungsformen des Kraftfahrzeugsitzes lassen sich mittels der Motorvorrichtung entweder aufwickeln oder translatorisch bewegen, um die gewünschte Zustell- und/oder Rückführungsbewegung des Sicherungselementes zu realisieren. Bei Verwendung eines zweiten strangförmigen Zugmittels dient die rotatorische oder translatorische Bewegung der strangförmigen Zugmittel zusätzlich der Gurtstraffung des Beckengurtes. Eine Kombination einer rotatorischen und translatorischen Bewegung der strangförmigen Zugmittel ist zur Erzielung der vorangehend genannten Effekte ebenfalls denkbar.

Eine weitere vorteilhafte Ausführungsform des Kraftfahrzeugsitzes unter Verwendung eines strangförmigen Zugmittels ist dadurch gekennzeichnet, dass das strangförmige Zugmittel mit seinem ersten Ende am Sicherungselement und mit seinem zweiten Ende über mindestens ein Umlenkelement an einem Endabschnitt eines am Kraftfahrzeugsitz vorgesehenen Beckengurtes befestigt ist Dabei verursacht die Bewegung des Sicherungselementes in einem Crash-Fall, dass sich der Beckengurt gleichzeitig aber das strangförmige Zugmittel zur Sitzfläche hin strafft. Auf diese Weise lässt sich die Funktion eines Gurtstraffers einfach und kostengünstig in den Kraftfahrzeugsitz integrieren.

Bei sämtlichen Ausführungsformen des erfindungsgemäßen Kraftfahrzeugsitzes ist es von Vorteil, das Sicherungselement plastisch verformbar auszubilden. Dabei wirkt es in einem Crash-Fall in Wechselwirkung mit dem Becken der auf der Sitzfläche sitzenden Person als energieabsorbierendes Element. Insbesondere ist es vorteilhaft, wenn die plastische Verformung des Sicherungselementes in einem Crash-Fall im Wesentlichen entlang der Sitzlängsrichtung mit dem Ziel der kontrollierten, gebremsten Bewegung des Beckens erfolgt.

Die Antriebseinrichtung des Kraftfahrzeugsitzes ist bevorzugt durch Signale eines CrashSensors in einem Kraftfahrzeug ansteuerbar. Der Kraftfahrzeugsitz lässt sich somit problemlos in das Sicherheitssystems eines Kraftfahrzeuges integrieren.

Dabei kann der Antriebsmotor der Antriebseinrichtung einerseits mittig zwischen zwei Längsseiten der Sitzfläche des entsprechenden Kraftfahrzeugsitzes angeordnet sein, oder es können alternativ zwei Antriebsmotoren zur Bewegung des Sicherungselementes vorgesehen sein, die an jeweils einer der beiden Längsseiten der Sitzfläche angeordnet sind.

Weitere Merkmale und Vorteile der Erfindung werden bei der nachfolgenden Beschreibung mehrerer Ausführungsbeispiele anhand der Figuren deutlich werden.

Es zeigen:
- Figur 1a: schematische Ansicht eines Längsschnitts einer ersten Ausführungsform des Kraftfahrzeugsitzes mit rotatorisch bewegbarem Sicherungselement in Ausgangslage;
- Figur 1b: Kraftfahrzeugsitz aus Figur 1a mit ausgelöstem Sicherungselement in Zustellbewegung;
- Figur 2a: schematische Ansicht eines Längsschnitts einer zweiten Ausführungsform des Kraftfahrzeugsitzes mit translatorisch bewegbarem Sicherungselement in Ausgangslage;
- Figur 2b: Kraftfahrzeugsitz aus Figur 2a mit ausgelöstem Sicherungselement in Zustellbewegung;
- Figur 3a: schematische Ansicht eines Längsschnitts einer dritten Ausführungsform des Kraftfahrzeugsitzes mit translatorisch bewegbarem Sicherungselement in Ausgangslage und Gurtstraffung;
- Figur 3b: Kraftfahrzeugsitz aus Figur 3a mit ausgelöstem Sicherungselement in Zustellbewegung;
- Figur 4a: schematische Ansicht eines Längsschnitts einer vierten Ausführungsform des Kraftfahrzeugsitzes mit translatorisch bewegbarem Sicherungselement in Ausgangslage und Gurtstraffung;
- Figur 4b: Kraftfahrzeugsitz aus Figur 4a mit ausgelöstem Sicherungselement in Zustellbewegung;
- Figur 5a: schematische Ansicht eines Längsschnitts einer fünften Ausführungsform des Kraftfahrzeugsitzes mit rotatorisch bewegbarem Sicherungselement in Ausgangslage und Gurtstraffung;
- Figur 5b: Kraftfahrzeugsitz aus Figur 5a mit ausgelöstem Sicherungselement in Zustellbewegung;
- Figur 6a: schematische Ansicht eines Längsschnitts einer sechsten Ausführungsform des Kraftfahrzeugsitzes mit rotatorisch bewegbarem Sicherungselement in Ausgangslage und Gurtstraffung;
- Figur 6b: Kraftfahrzeugsitz aus Figur 6a mit ausgelöstem Sicherungselement in Zustellbewegung;
- Figur 7a: schematische Ansicht eines Längsschnitts einer siebten Ausführungsform des Kraftfahrzeugsitzes mit rotatorisch bewegbarem Sicherungselement in Ausgangslage und Gurtstraffung;
- Figur 7b: Kraftfahrzeugsitz aus Figur 7a mit ausgelöstem Sicherungselement in Zustellbewegung und
- Figur 8: eine Perspektivansicht eines bügelförmigen, energieabsorbierend ausgebildeten Sicherungselementes;
- Figuren 9a und 9b: eine perspektivische Ansicht und eine Seitenansicht eines Sitzteiles mit einer ersten konkreten Ausführungsform eines mittels einer Antriebseinrichtung einstellbaren Sicherungselementes;
- Figur 10: eine zweite konkrete Ausführungsform eines mittels einer Antriebseinrichtung einstellbaren Sicherungselementes in perspektivischer Darstellung;
- Figuren 11a und 11b: ein weiteres Ausführungsbeispiel eines Sitzteiles mit einer konkreten Ausführungsform eines durch eine Antriebseinrichtung einstellbaren Sicherungselementes in einer perspektivischen Darstellung sowie einer Seitenansicht;
- Figur 12: eine perspektivische Darstellung eines Sitzteiles mit einer vierten konkreten Ausführungsform eines durch eine Antriebseinrichtung einstellbaren Sicherungselementes;
- Figuren 13a und 13b: eine perspektivische Darstellung und eine Seitenansicht einer fünften konkreten Ausführungsform eines mittels einer Antriebseinrichtung einstellbaren Sicherungselementes.

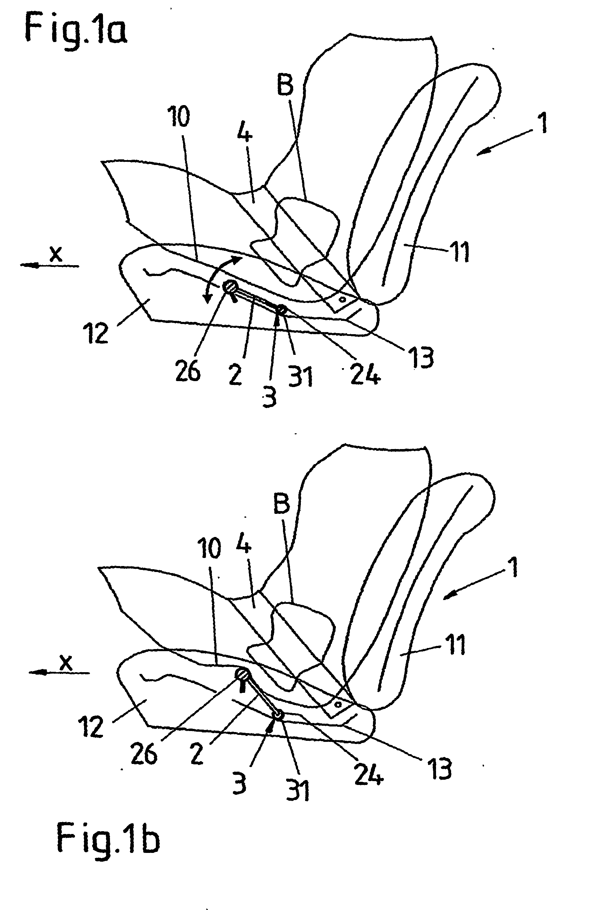

Figur 1a zeigt eine schematische Ansicht eines Längsschnitts entlang der Sitzlängsrichtung X einer ersten Ausführungsform eines Kraftfahrzeugsitzes 1 mit einer Sicherheitsvorrichtung. Der Kraftfahrzeugsitz 1 weist in bekannter Weise ein Rückenlehnenteil 11 und ein Sitzteil12 mit einer auf der Oberseite des Sitzteiles 12 angeordneten Sitzfläche 10 auf. Das Sitzteil 12 umfasst eine Sitzschale 13; auf der eine Polsterung vorgesehen ist Auf der Oberfläche der Polsterung ist wiederum die Sitzfläche 10 angeordnet. Vom Körper einer auf dem Kraftfahrzeugsitz sitzenden Person ist in Figur 1a der Bereich von den Knien bis zum Hals gezeigt, wobei der Oberschenkelbereich und der Beckenbereich auf der Sitzfläche 10 des Sitzteiles 12 zu liegen kommen. Das Becken B der sitzenden Person ist schematisiert unterhalb eines Beckengurtabschnitts 4 eines Sicherheitsgurtes gezeigt.

Zwischen der Sitzschale 13 und der Sitzfläche 10 des Sitzteiles 12 ist zur Bildung - der Sicherheitsvorrichtung ein bügelförmiges Sicherungselement 2 angeordnet. Zwischen den Endbereichen 24, 24' des Sicherungselements 2, von denen aufgrund der Längsschnittansicht nur der eine Endabschnitt 24 in Figur 1a zu sehen ist, erstreckt sich ein sich ein im Wesentlichen senkrecht zur Längsschnittebene erstreckender Verstellabschnitt 26 in Form eines Schwenkabschnittes. Das bügelförmige Sicherungselement 2 ist mit seinen Endbereichen 24,24' schwenkbar an der Seitenstruktur und/oder Sitzschale 13 des Kraftfahrzeugsitzes 1 angelenkt.

Figur 1b zeigt die gleiche Schnittansicht wie Figur 1a, wobei gleiche Elemente des Kraftfahrzeugsitzes mit gleichen Bezugszeichen versehen sind.

Das Sicherungselement 2 weist eine Antriebseinrichtung 3 zum Generieren einer rotatorischen Bewegung des Verstellabschnittes 26 in Richtung der Sitzfläche 10 und des Beckens B einer auf dem Kraftfahrzeugsitz 1 sitzenden Person auf (rotatorische Zustellbewegung). Die Antriebseinrichtung 3 ist in Form einer an mindestens einem der Endbereiche 24, 24' des bügelförmigen Sicherungselementes 2 angeordneten Motorvorrichtung 31 ausgebildet. Diese Motorvorrichtung 31 bildet gleichzeitig die Mittel, die das Rückführen des Sicherungselements 2 in die Ausgangslage nach einem Crash-Fall ermöglichen.

Es wäre jedoch ebenso denkbar, dass die in den Figuren 1a und 1b. gezeigte Motorvorrichtung 31 ausschließlich für die Zustellbewegung oder für das Rückführen des Sicherungselementes 2 dient. Dann müsste jeweils eine mit dem Sicherungselement 2 in Wirkverbindung stehende Federvorrichtung vorhanden sein, die zur Generierung der Zustellbewegung bzw. der Rückführbewegung dient und jeweils durch die von der Motorvorrichtung 31 angetriebenen Gegenbewegung des Sicherungselementes 2 vorgespannt wird.

Die Zustellbewegung des Sicherungselementes 2 bewirkt die Bildung einer quer zur Sitzlängsrichtung X verlaufenden im Wesentlichen entlang der gesamten Breite der Sitzfläche 10 erstreckenden Schwelle, weiche unter Zwischenlage der dabei in diesem Bereich stark komprimierten Polsterung in unmittelbaren Beckenkontakt gebracht wird. Durch die komprimierte Polsterung zwischen Sicherungselement 2 und Sitzfläche 10 wird die sogenannten Lose zwischen dem Becken B und dem Sicherungselement 2 reduziert. Das bevorzugt horizontal in X-Richtung deformierbar und vertikal steif ausgebildete Sicherungselement 2 kann somit im Crash-Fall die über das Becken B eingeleitete Energie des Insassen unmittelbar in Verformungsarbeit umsetzen. Auf diese Weise wird eine gleichmäßige, geringe Belastung des Beckens B und anderer Körperteile realisiert. Zusätzlich reduzieren sich dadurch auch die Belastungen des Fahrzeugsitzes 1.

Die zur plastischen Verformung benötigte Kraft ist dabei derart ausgelegt, dass die Vorwärtsbewegung des Becken B einer sitzenden Person in einem Crash-Fall auf einer durch die Deformation des Sicherungselementes 2 kontrollierten Strecke entlang der Sitzlängsrichtung X gebremst wird. Dadurch lassen sich die auf das Becken B und die Wirbelsäule einer sitzenden Person im Crash-Fall wirkende Kräfte reduzieren. Das Sicherungselement 2 wirkt auf diese Weise als energieabsorbierendes Element.

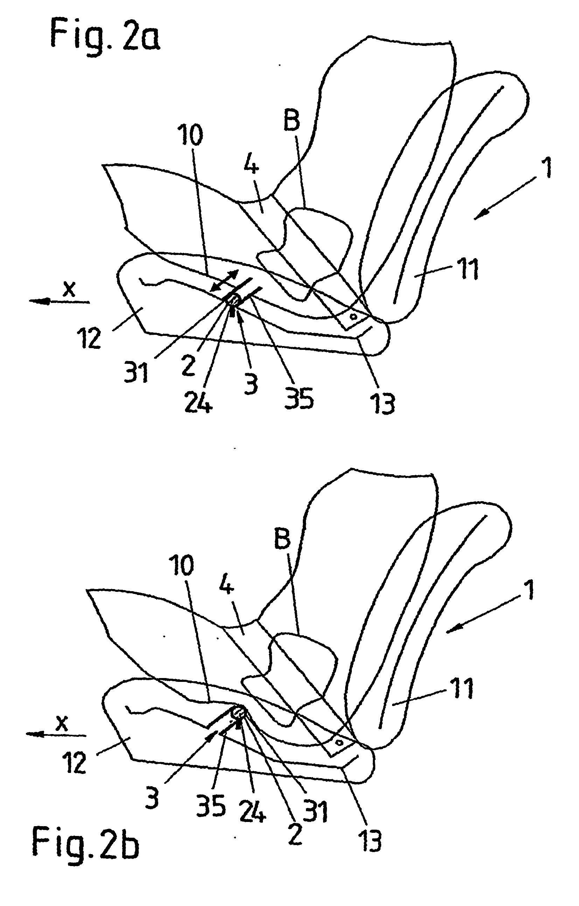

Figur 2a zeigt eine zweite Ausführungsform des Kraftfahrzeugsitzes 1 in der gleichen schematischen Längsschnittansicht wie Figur 1a.

Im Unterschied zur ersten Ausführungsform weist dieser Kraftfahrzeugsitz 1 ein translatorisch bewegbares Sicherungselement 2 auf. Das sich Im Wesentlichen strangförmig erstreckende und im Wesentlichen senkrecht zur Längsschnittebene angeordnete Sicherungselement 2 ist dabei mit seinen Endabschnitten 24 jeweils in den beiden Seitenbereichen des Sitzteils 12 in Führungsstrukturen 35 angeordnet. Die Führungsstrukturen 35 können dabei schienenartig ausgebildet sein.

Genau wie bei der vorangehend beschriebenen Ausführungsform des Kraftfahrzeugsitzes 1 existieren drei grundsätzliche Varianten hinsichtlich der Ausbildung der Antriebseinrichtung 3.

In einer ersten Variante weist die Antriebseinrichtung 3, wie in Figur 2b dargestellt, an jeder Seite des Kraftfahrzeugsitzes eine Motoreinrichtung 31 auf, die sowohl die Zustellbewegung als auch die Rückführbewegung des Sicherungselementes 2 antreibt.

In der zweiten Variante ist die Motorvorrichtung 31 ausschließlich für die Zustellbewegung vorgesehen, wobei die Rückführbewegung des Sicherungselementes 2 mittels einer in den Figuren 2a und 2b nicht dargestellten Federeinrichtung realisiert wird. Die Federeinrichtung wird dann bei der Zustellbewegung des Sicherungselementes 2 vorgespannt

In der dritten Variante ist die Motorvorrichtung 31 für die Rückführbewegung des Sicherungselementes 2 vorgesehen, wobei die Zustellbewegung mittels eines in den Figuren 2a und 2b nicht dargestellten Federelementes realisierbar ist. Für dieses Federelement ist eine Haltevorrichtung erforderlich, die im Crash-Fall auslösbar ist. Als Motorvorrichtung 31 kann insbesondere ein Elektromagnet eingesetzt werden, der die benötigte lineare Bewegung des Sicherungselementes 2 zusammen mit den Führungsstrukturen 35 bereitstellt.

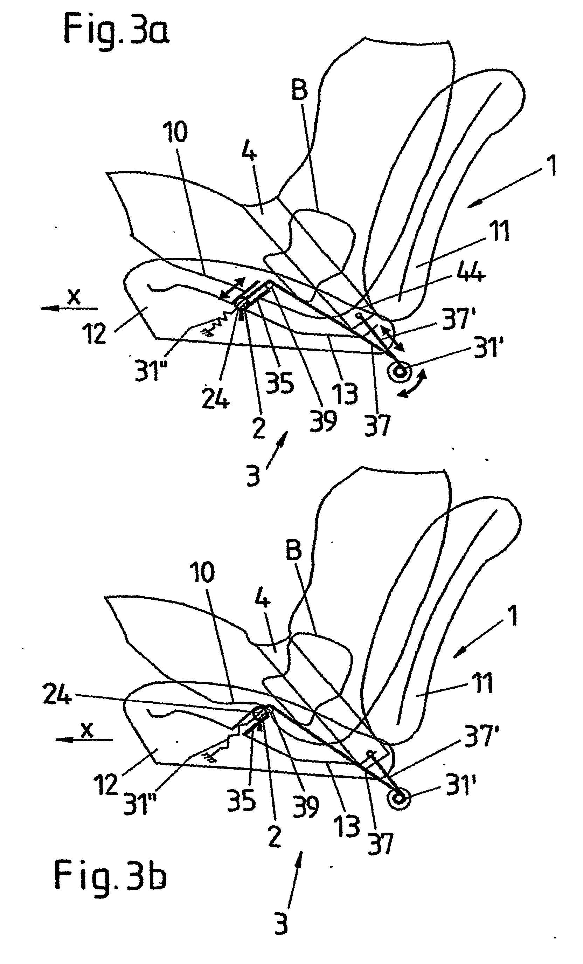

In den Figuren 3a bis 7b sind fünf weitere Ausführungsformen des Kraftfahrzeugsitzes gezeigt, die das Prinzip eines rückführbaren Sicherungselementes 2 mit einer Einrichtung zum Straffen des Beckengurtes eines am Kraftfahrzeugsitz angeordneten Sicherheitsgurtes kombinieren.

Allen fünf dargestellten Ausführungsformen ist gemeinsam, dass die Antriebseinrichtung 3 mindestens ein strangförmiges Zugmittel 37 umfasst. Dieses strangförmige Zugmittel 37 steht mit der Motoreinrichtung 31, 31'derart In Wirkverbindung, dass sich während der Zustellbewegung des Sicherungselementes 2 in einem Crash-Fall gleichzeitig der am Becken B angeordnete Endabschnitt 44 eines Sicherheitsgurtes 4 zur Sitzfläche 10 hin strafft.

Figur 3a zeigt ein erstes Ausführungsbeispiel eines erfindungsgemäßen Kraftfahrzeugsitzes 1 mit integrierter Gurtstraffer-Einrichtung in einer Längsschnittdarstellung parallel zur Sitzlängsrichtung X. Wie bei dem in den Figuren 2a und 2b gezeigten Fahrzeugsitz 1 ist ein translatorisch bewegbares Sicherungselement 2 vorgesehen. Abweichend vom Kraftfahrzeugsitz 1 aus Figur 2a ist die Motorvorrichtung 31' im Bereich unterhalb des Rückenlehnteils 11 angeordnet und steht über ein erstes strangförmiges Zugmittel 37 mit dem Sicherungselement 2 in Wirkverbindung. Das strangförmige Zugmittel 37 ist dazu mit seinem einen Ende am Sicherungselement befestigt, über ein als Umlenkrolle 39 ausgebildetes Umlenkmittel zur Motorvorrichtung 31 geführt.

Außerdem weist die Antriebseinrichtung 3 ein zweites strangförmiges Zugmittel 37' auf. Dieses zweite strangförmige Zugmittel 37' ist mit seinem einen Ende an der Motorvorrichtung 31' und mit seinem zweiten Ende am Endabschnitt 44 des am Becken B einer sitzenden Person verlaufenden Sichertieitsgurtes 4 befestigt und stellt somit die Wirkverbindung zwischen Motorvorrichtung 31' und dem Sicherheitsgurt 4 her.

Weiterhin ist am Sicherungselement 2 ein als Federelement 31" ausgebildetes Mittel zum Rückführen des Sicherungselementes 2 in die Ausgangslage angeordnet. Dieses Federelement 31" wird, wie in Figur 3b dargestellt, während der durch die Motorvorrichtung 31' angetriebenen Zustellbewegung des Sicherungselementes 2 derart vorgespannt, dass die Federkraft des Federelementes 31" ausreicht, das Sicherungselement 2 wieder in die Ausgangslage zurückzubewegen. Zur Erzeugung der Zustellbewegung des Sicherungselementes 2 wickelt die Motorvorrichtung 31' einen Teil des strangförmigen ersten Zugmittels 37 auf. Gleichzeitig wickelt die Motorvorrichtung 31' das zweite strangförmige Zugmittel 37' teilweise auf, so dass der Endabschnitt 44 des Sicherheitsgurtes 4 zur Sitzfläche hin gezogen wird. Auf diese Weise unterstützt die Straffung des Sicherheitsgurtes 4 die bereits beschriebene Wirkung der Zustellbewegung des Sicherungselementes 2 und wirkt somit einem unkontrollierten Vorvertagern des Beckens B einer sitzenden Person in einem Crash-Fall zusätzlich entgegen.

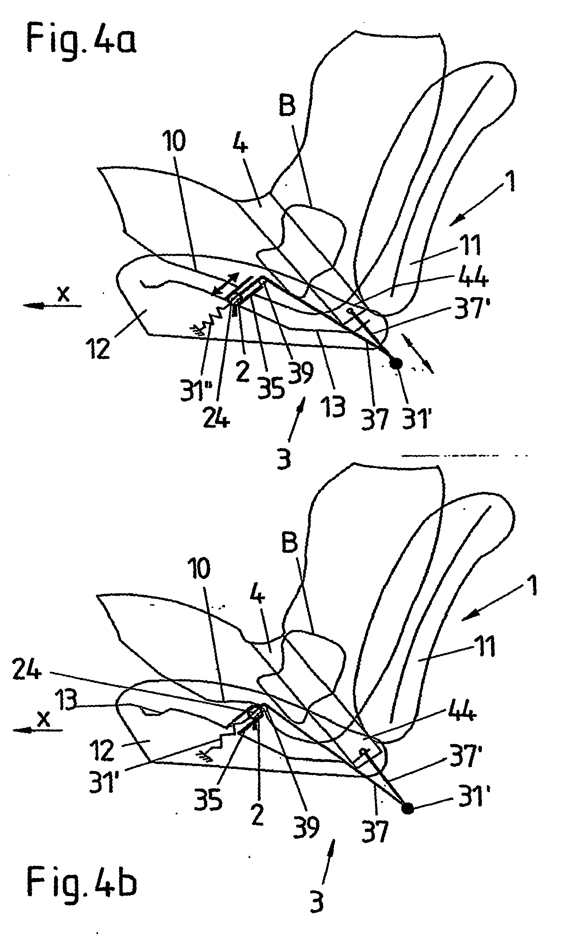

In den Figuren 4a und 4b ist eine der ersten Ausführungsform aus den Figuren 3a und 3b sehr ähnliche zweite Ausführungsform eines erfindungsgemäßen Kraftfahrzeugsitzes 1 mit integriertem Gurtstraffer dargestellt. Der einzige Unterschied besteht darin, dass die Motorvorrichtung 31' die Zustellbewegung und die Gurtstraffung nicht durch das Aufwickeln der strangförmigen Zugmittel 37 und 37' sondern durch eine translatorische Bewegung der der Motorvorrichtung 31' zugeordneten Endabschnitte der strangförmigen Zugmittel 37, 37' realisiert. Zur Erzeugung der linearen Bewegung kann insbesondere ein entsprechend ausgebildeter Elektromagnet als Motorvorrichtung 31' dienen.

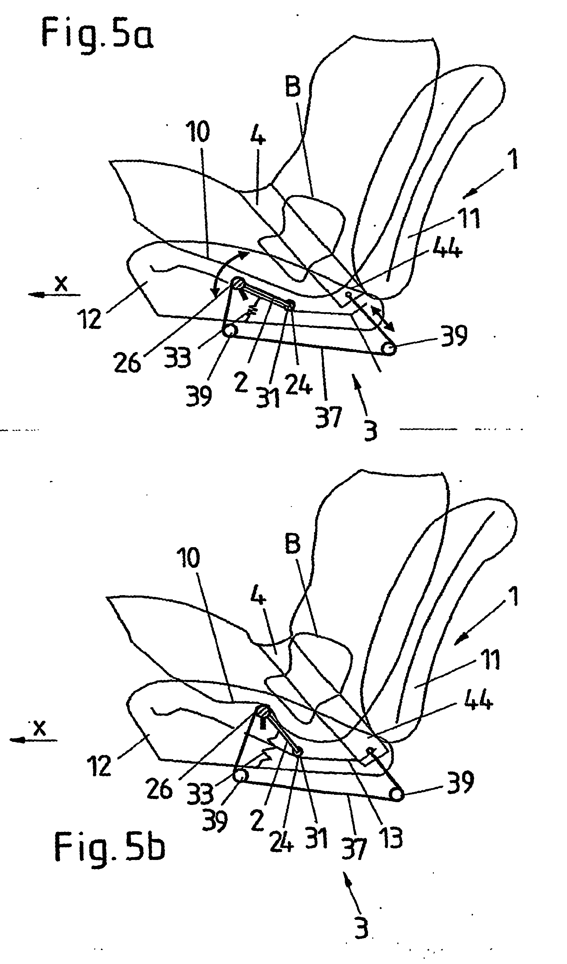

In den Figuren 5a und 5b ist eine dritte Ausführungsform eines erfindungsgemäßen Kraftfahrzeugsitzes mit integriertem Gurtstraffer dargestellt. Wie bei dem in den Figuren 1a und 1b dargestellten Kraftfahrzeugsitz ist ein rotatorisch bewegliches, bügelförmiges Sicherungselement 2 dargestellt. Zusätzlich weist die Antriebseinrichtung 3 ein Federelement 33 für die Zustellbewegung des Sicherungselementes 2 auf. In der in Figur 5a dargestellten Ausgangslage des Sicherungselementes 2 ist das Federelement 33 gegenüber dem Sicherungselement 2 vorgespannt. In einem Crash-Fall wird eine in Figur 5a nicht dargestellte Haltevorrichtung ausgelöst, damit die durch das Federelement 33 angetriebene rotatorische Zustellbewegung des Sicherungselementes 2 in Richtung der Sitzfläche 10, wie in Figur 5b dargestellt, erfolgen kann. Die an einem angelenkten Endabschnitt des Sicherungselementes 2 angeordnete Motorvorrichtung 31 dient zum Rückführen des rotatorisch beweglichen Sicherungselementes.

Am Verstellabschnitt 26 des bügelförmigen Sicherungselements 2 ist ein strangförmiges Zugmittel 37 angeordnet, dass über Umlenkmittel 39 derart mit dem Endabschnitt 44 eines Beckengurts 4 in Wirkverbindung steht, dass die rotatorische Zustellbewegung des Sicherungselementes 2 zwangsläufig eine Straffung des Beckengurts 4 zur Sitzfläche 10 hin verursacht. Bei der in den Figuren 5a und 5b dargestellten Ausführungsform sind dazu zwei als Umlenkrollen 39 ausgebildete Umlenkmittel unterhalb der Sitzschale 13 im Wesentlichen entlang der Sitzlängsrichtung X angeordnet.

Bei dem in den Figuren 5a und 5b wäre ebenso denkbar, als Mittel zur Rückführung des Sicherungselementes 2 eine Federeinrichtung vorzusehen, die bei der durch die Motorvorrichtung 31 angetriebenen Zustellbewegung des Sicherungselementes 2 entgegen der Zustellbewegung vorgespannt wird. Wenn ein Federelement für die Zustellbewegung oder für die Rückführbewegung vorgesehen ist, ließe die Motorvorrichtung 31 ebenso an einer beliebigen Stelle entlang des strangförmigen Zugmittels 37 insbesondere integriert mit den Umlenkmitteln 39 vorsehen.

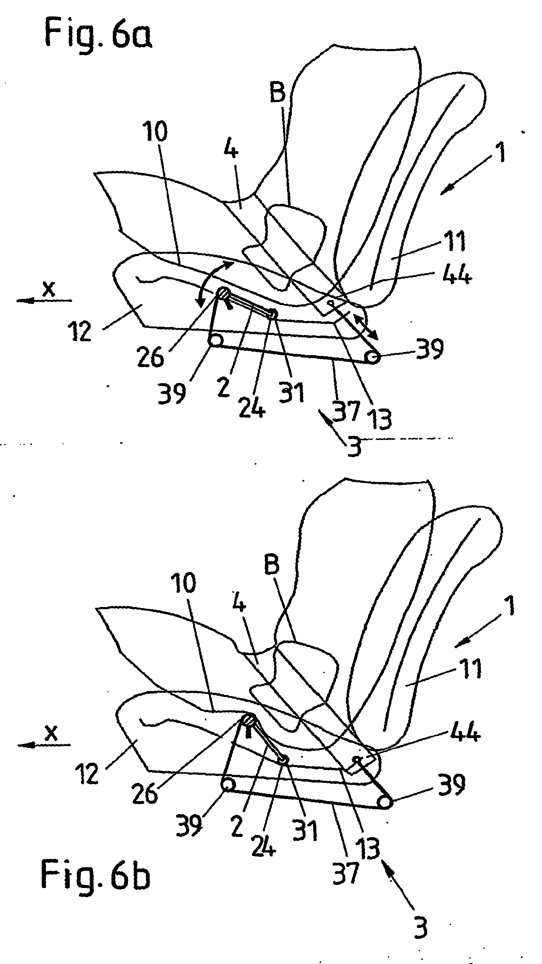

Ausgehend von der in den Figuren 5a und 5b gezeigten Ausführungsform ist eine weitere Variante, bei der die Motorvorrichtung 31 sowohl für die Zustellbewegung als auch für die Rückführbewegung des Sicherungselementes 2 vorgesehen ist, als vierte Ausführungsform des erfindungsgemäßen Kraftfahrzeugsitzes 1 in den Figuren 6a und 6b dargestellt.

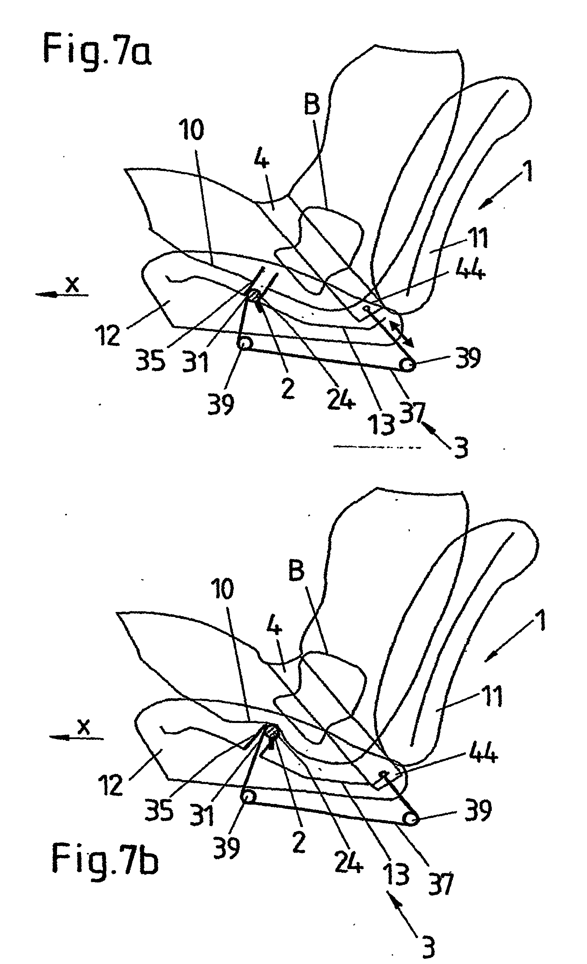

In den Figuren 7a und 7b ist eine fünfte Ausführungsform eines erfindungsgemäßen Kraftfah2eugsitzes 1 mit Integriertem Gurtstraffer dargestellt. Dieser Kraftfahrzeugsitz 1 weist ein translatorisch bewegliches Sicherungselement 2 gemäß der Beschreibung zu den Figuren 2a und 2b auf. Ansonsten entspricht der Aufbau der Antriebsvorrichtung 3 mit einem strangförmigen Zugmittel 37 der in den Figuren 6a und 6b gezeigten Darstellung. Daher gelten die zu den genannten Figuren gemachten Ausführungen entsprechend zu der in den Figuren 7a und 7b gezeigten Ausführungsform.

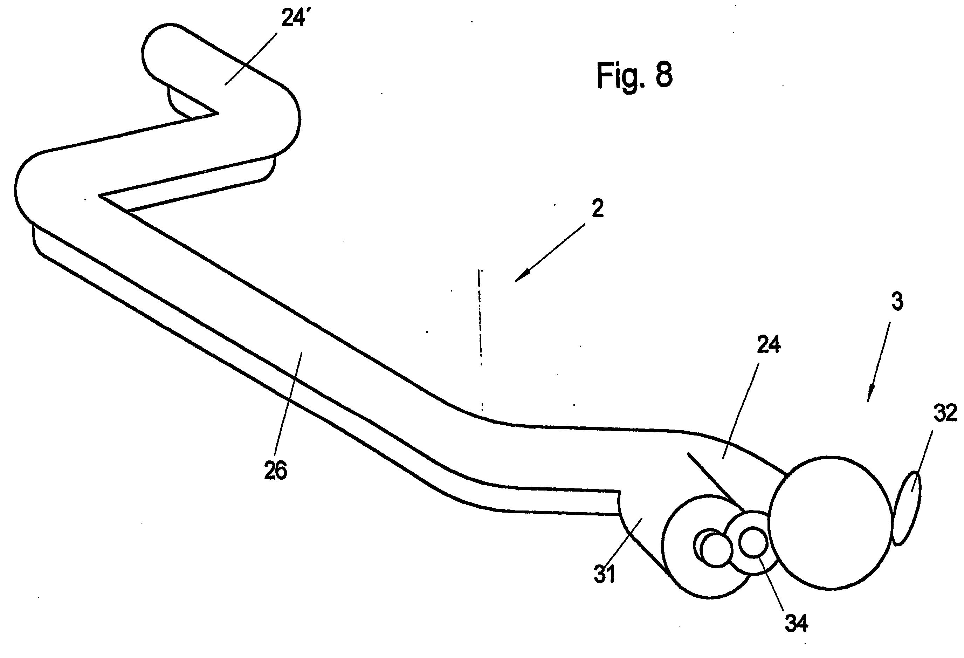

Figur 8 zeigt eine schematische Perspektivansicht eines bügelförmigen Sicherungselements 2, das für die in den Figuren 1a und 1b bzw. 5a bis 6b gezeigten Ausführungsformen des erfindungsgemäßen Kraftfahrzeugssitzes 1 verwendbar ist.

Zwischen den beiden Endabschnitten 24, 24' des bügelförmigen Sicherungselementes 2 erstreckt sich ein geradliniger Verstellabschnitt 26 in Form eines Schwenkabschnittes. Die beiden Endabschnitten 24, 24' sind-derart vom Verstellabschnitt 26 abgewinkelt, dass sie eine Schwenkachse ausbilden. Das Sicherungselement 2 lässt sich somit an den Endabschnitten 24, 24' auf einfache Weise schwenkbar anlenken, damit der Verstellabschnitt 26 im Sitzteil 12 eines Kraftfahrzeugsitzes 1 in Richtung der Sitzfläche 10 bewegbar ist.

Im Bereich des einen Endabschnitts 24 ist eine Motorvorrichtung 31 mit einem Getriebe 34 angeordnet, um ein Drehmoment auf das Sicherungselement 2 zu übertragen und um die Schwenkachse zu verschwenken. Das Getriebe 34 steht weiterhin mit einer Sperre 32 in Wirkverbindung, die eine Rückführbewegung des Sicherungselementes 2 während der Zustellbewegung sperrt. Die Wirkverbindung der Sperre 32 mit dem Getriebe 34 lässt sich bei Bedarf lösen, um das Sicherungselement 2 beispielsweise durch die Motorvorrichtung 31 oder durch ein In Figur 8 nicht dargestelltes Federelement in die Ausgangslage zurückzuführen.

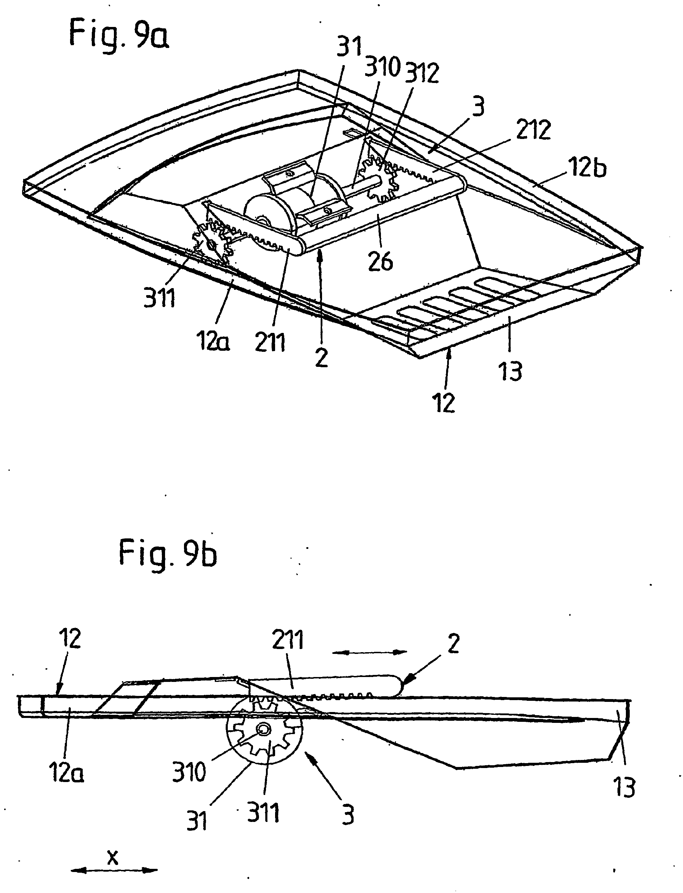

Nachfolgend werden anhand der Figuren 9a bis 13b fünf Ausführungsbeispiele für eine konkrete Ausgestaltung des Sicherungselementes 2 und der zugeordneten Antriebseinrichtung 3 beschrieben, die jeweils an einem eine Sitzschale 13 umfassenden Sitzteil 12 angeordnet sind.

Wie anhand der Figuren 9a und 9b erkennbar, ist mittig zwischen den beiden in Sitzlängsrichtung X erstreckten Längsseiten 12a, 12b des Sitzteils 12 an der Sitzschale 13 ein Antriebsmotor 31 angeordnet, von dem zu beiden Längsseiten 12a, 12b hin jeweils eine Motorwelle 310 senkrecht zur Fahrzeuglängsachse X absteht und an ihrem Ende mit einem Zahnrad 311 bzw. 312 versehen ist. Jedes dieser durch den Antriebsmotor 31 antreibbaren Zahnräder 311, 312 steht in Eingriff mit der Verzahnung einer zugeordneten Zahnstange 211, 212, die sich parallel zu einer Längsseite 12a, 12b des Sitzteiles 12 in Sitzlängsrichtung X erstreckt. An einem Ende der beiden Zahnstangen 211, 212 ist ein den Verstellabschnitt 26 des Sicherungselementes 2 bildendes Rohr aufgenommen, das durch Betätigung der Antriebseinrichtung 3 über die Zahnstangen 211, 212 entlang der Fahrzeuglängsachse X verstellbar ist, wie anhand des Doppelpfeiles in Figur 9b angedeutet. Je nach Drehrichtung des Antriebsmotors 31 ist dabei einerseits eine Verlagerung des Sicherungselementes 2 aus einer Ausgangslage heraus möglich, um der Vorverlagerung des Beckens einer auf dem entsprechenden Fahrzeugsitz sitzenden Person entgegenzuwirken, oder alternativ ein Rückführen des Sicherungselementes 2 in die Ausgangslage.

In den Figuren 9a und 9b ist das Sicherungselement 2 in seinem crash-bedingt vorverlagerten Zustand dargestellt, aus dem es durch Betätigung des Antriebsmotors 3 wieder in die Ausgangslage rückführbar ist.

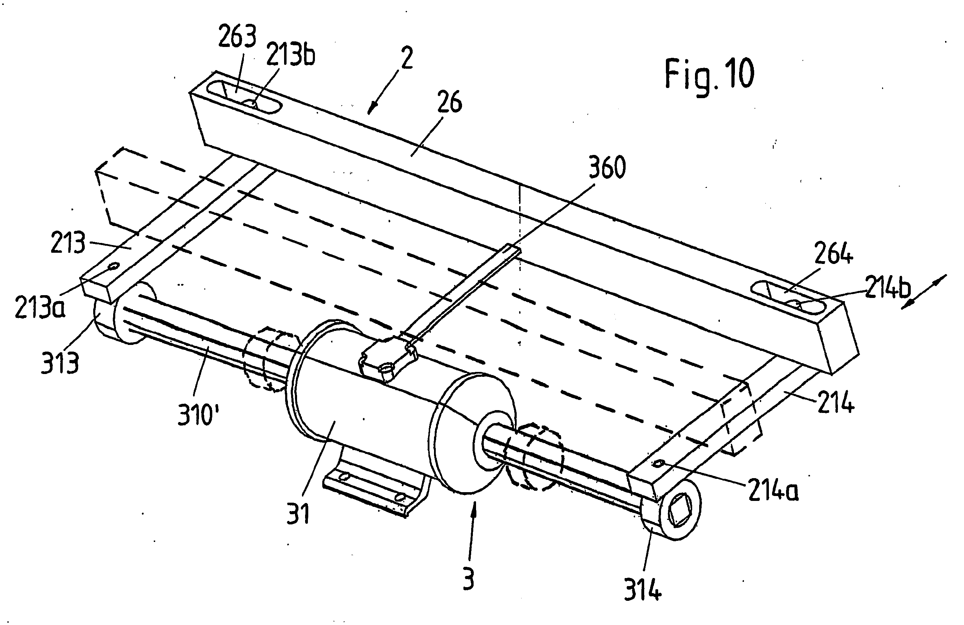

In Figur 10 sind ein Sicherungselement 2 und eine zugeordnete Antriebseinrichtung 3 mit einem mittig anzuordnenden Antriebsmotor 31 ohne das zugehörige Sitzteil dargestellt. Wie bei dem anhand der Figuren 9a und 9b erläuterten Ausführungsbeispiel geht von dem Antriebsmotor 31 in zwei einander entgegengesetzten Richtungen eine Antriebswelle 310' ab, wobei jedoch vorliegend die außerhalb des Motorgehäuses liegenden Abschnitte der Antriebswelle 310' mit einem Außengewinde versehen sind. Auf diesen, mit einem Außengewinde versehenen Abschnitten der Antriebswelle 10 ist beidseits des Antriebsmotors 31 jeweils eine mit einem Innengewinde versehene Buchse 313, 314 vorgesehen, weiche auf der Antriebswelle 310' drehfest aber längsverschieblich gelagert sind. An jeder der Buchsen 313, 314 ist an einem Gelenkpunkt 213a, 214a eine Verbindungsstange 213 bzw. 214 derart schwenkbar angelenkt, dass sich die Verbindungsstangen 213, 214 in ihrer gemeinsamen Ebene frei um ihre jeweilige Gelenkachse 213a, 214a drehen können. Die beiden Verbindungssangen 213, 214 erstrecken sich hin zu dem durch eine Querstange gebildeten Verstellabschnitt 26 des Sicherungselementes 2 und stehen mit diesem über in jeweils eine Längsführung (Langloch) 263, 264 eingreifende Stifte 213b, 214b in Eingriff. Der vordere Verstellabschnitt 26 des Sicherungselementes 2 ist zusätzlich in einem von dem Gehäuse des Antriebsmotors 31 in Längsrichtung abstehenden, längserstreckten Führungselement 360 geführt.

Figur 10 zeigt den vorderen Verstellabschnitt 26 des Sicherungselementes 2 nach einer translatorischen Bewegung (entlang der Richtung des Doppelpfeiles in Figur 10) weg von dem Antriebsmotor 31 (Zustellbewegung) in eine crash-bedingte vorverfagerte Position, in der er dem Durchrutschen des Beckens einer auf dem entsprechenden Kraftfahrzeug sitzenden Person entgegenwirkt. Durch Betätigung des Antriebsmotors 31 (mit einer Umkehr der Drehrichtung des Motors bezogen auf die vorhergehende Vorverlagerung des vorderen Verstellabschnittes 26 des Sicherungselementes 2) lässt sich das Sicherungselement 2 wieder in die Ausgangslage zurückführen, die in Figur 10 gestrichelt dargestellt ist. Die Übertragung der Verstellkraft des Antriebsmotors 31 auf den vorderen Verstellabschnitt 26 des Sicherungselementes 2 erfolgt dabei über die längsverschieblich auf der Antriebswelle 310' gelagerten Buchsen 313, 314, weiche sich nach innen in Richtung auf den Antriebsmotor 31 bewegen, sowie über die hieran gelenkbar angelenkten Verbindungsstangen 213, 214. Zur definierten Längsführung des vorderen Verstellabschnittes 26 des Sicherungselementes 2 dient dabei das von dem Gehäuse des Antriebsmotors 31 abstehende längserstreckte Führungselement 360.

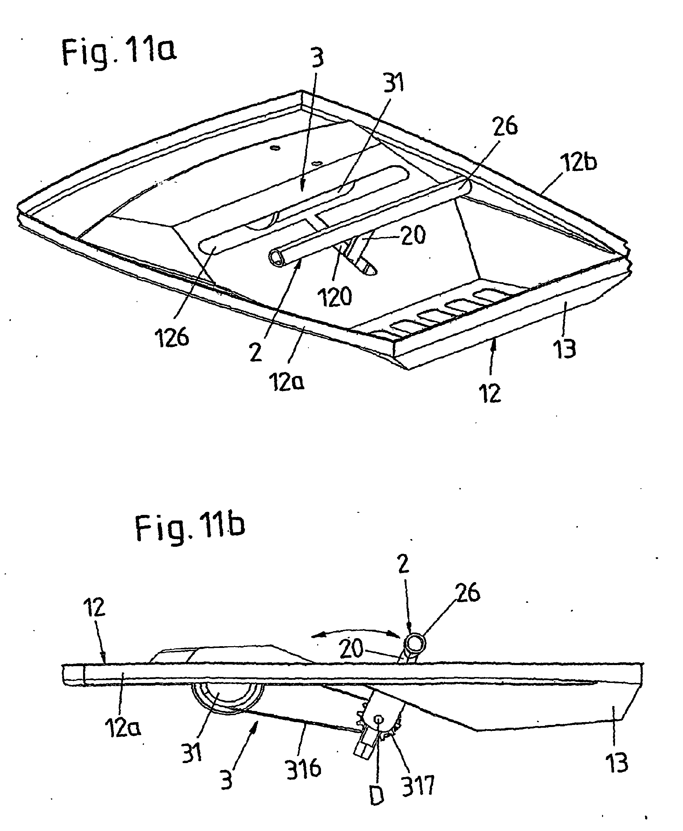

Bei dem in den Figuren 11a und 11b dargestellten Ausführungsbeispiel ist der relevante Verstellabschnitt 26 des Sicherungselementes 2 durch Verschwenken um eine Drehachse D verlagerbar, wobei der rohrförmig ausgebildete Verstellabschnitt 26 des Sicherungselementes 2 über ein Verbindungsrohr 20 an der Drehachse D angelenkt ist. Zum Verschwenken des Verstellabschnittes 26 des Sicherungselementes 2 dient ein mittig zwischen den Längsseiten 12a, 12b des Sitzteiles 12 angeordneter Antriebsmotor 31, dessen Motorwelle über einen Zahnriemen 316 ein Zahnrad 317 antreibt, welches mit dem Verbindungsrohr 20 des Sicherungselementes 2 verbunden ist, so dass bei einer Betätigung des Antriebsmotors 31 ein Verschwenken des Sicherungselementes 2 erfolgt. Alternativ zu dem Zahnriemen kann die Kraftübertragung von dem Antriebsmotor 31 beispielsweise mittels eines Kettentriebes oder eines Keilriemens erfolgen.

Die Figuren 11a und 11b zeigen das Sicherungselement 2 in einem Zustand, in dem dessen Verstellabschnitt 26 durch Verschwenken in eine Position verlagert worden ist, in der er das Durchrutschen des Beckens eines Fahrzeuginsassen in einem Crash-Fall unter dem Beckengurt verhindern soll. Aus dieser Position heraus ist das Sicherungselement 2 durch Betätigung des Antriebsmotors 31 der Antriebseinrichtung 3 mit einer entsprechenden Drehrichtung in seiner Ausgangslage zurückführbar, wobei das Verbindungsrohr 20 des Sicherungselementes 2 in einem Längsschlitz 120 des Sitzteiles 12 geführt wird und der Verstellabschnitt 26 in seiner Ausgangslage schließlich in einen zugeordneten Querschlitz 126 des Sitzteiles 12 eintaucht.

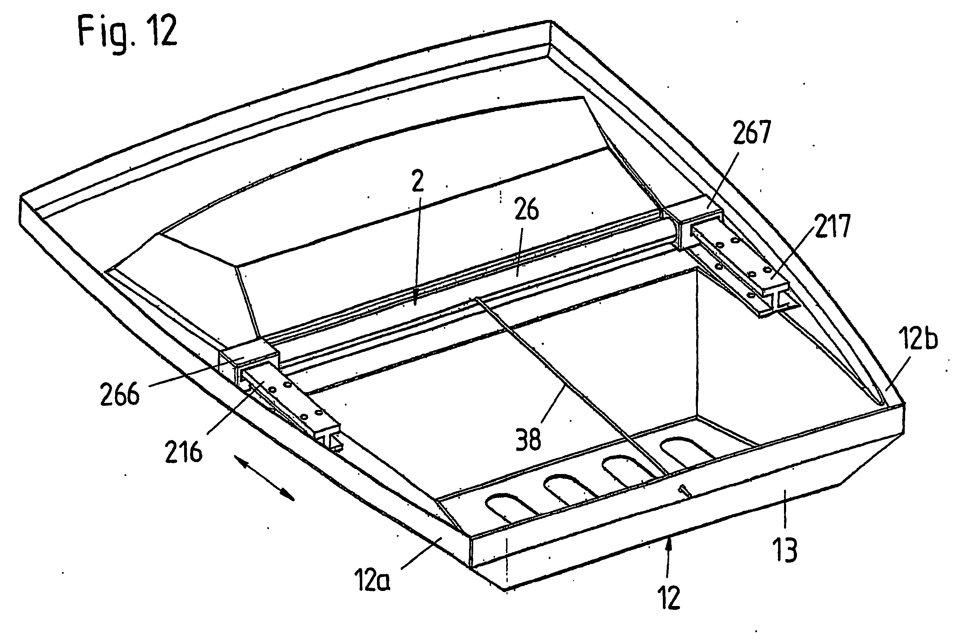

Bei dem in Figur 12 ohne den zugeordneten Antriebsmotor dargestellten Ausführungsbeispiel wird der relevante Verstellabschnitt 26 des Sicherungselementes 2 durch ein mittig zwischen den beiden Längsseiten 12a, 12b des Sitzteiles 12 erstrecktes Zugmittel 38 bewegt, wobei der Verstellabschnitt 26 des Sicherungselementes 2 mit seitlichen Führungselementen 266, 267 auf jeweils einer, entlang einer der Längsseiten 12a, 12b erstreckten Führungsschiene 216 bzw. 217 geführt ist.

Figur 12 zeigt das Sicherungselement 2 in seiner Ausgangslage, aus der es in einen Crash-Fall heraus in Sitzlängsrichtung (entlang des in der Figur dargestellten Doppelpfeiles) mittels einer Zustellbewegung in eine vorverlagerte Position bewegbar ist, in der es dem Durchrutschen des Beckens eines Fahrzeuginsassen unter dem Beckengurt entgegenwirkt.

Hinsichtlich der Ausbildung des Zugmittels 38 sind unterschiedliche Varianten denkbar Bei einem umlaufenden Zugmittel, z, B. in dem die beiden freien Enden eines Zugmittels jeweils mit dem Sicherungselement 2 verbunden sind, erfolgt die Rückführung des Zugmittels durch Drehrichtungsumkehr des Antriebsmotors bezogen auf die vorhergehende Vorverlagerung des Zugmittels. Bei einem längserstreckten Zugmittel 38, das, wie in Figur 12 dargestellt, einerseits an dem relevanten Verstellabschnitt 26 des Sicherungselementes 2 und mit dem anderen Ende an einem geeigneten Teil des (nicht dargestellten) Antriebsmotors befestigt ist, kann die Rückstellbewegung beispielsweise mittels einer Federanordnung erfolgen. Alternativ kann ein solches Zugmittel 38 auch derart angeordnet werden, dass die Vorverlagerung des Sicherungselementes 2 in einem Crash-Fall mittels einer Federanordnung erfolgt und die Rückstellbewegung durch das mit dem Antriebsmotor gekoppelte Zugmittel vorgenommen wird.

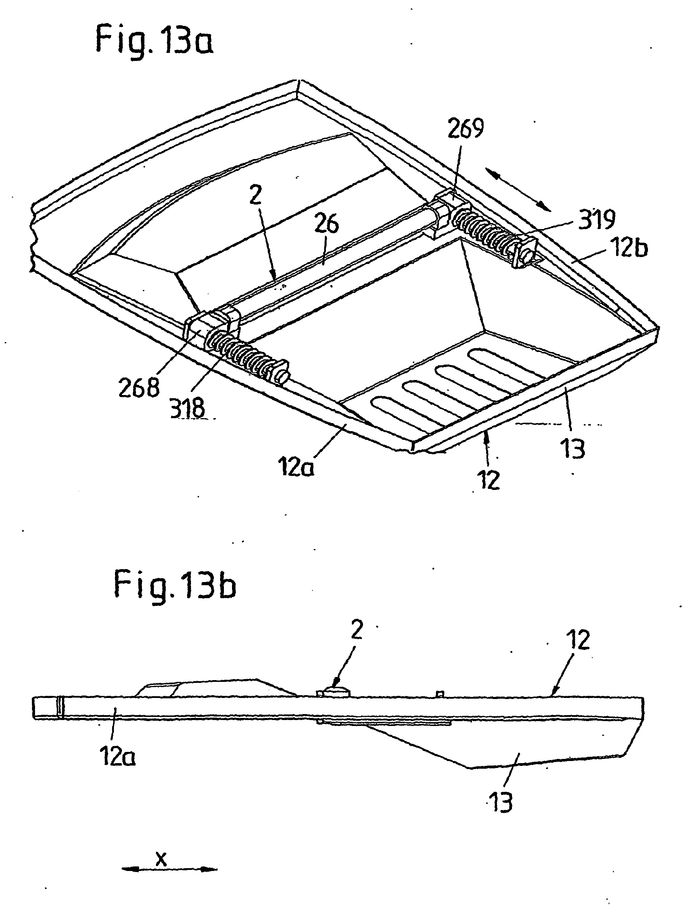

Bei dem in den Figuren 13a und 13b dargestellten Ausführungsbeispiel weist der relevante, vordere Verstellabschnitt 26 des Sicherungselementes 2, welcher sich zwischen den beiden Längsseiten 12a, 12b des Sitzteiles 12 quer zur Sitzlängsrichtung X erstreckt, an seinen beiden äußeren Enden jeweils eine Spindelmutter 268, 269 auf, die auf einer in Sitzlängsrichtung X erstreckten Gewindespindel 318, 319 drehfest und längsverschieblich gelagert ist. Die beiden Gewindespindeln 318, 319 erstrecken sich jeweils entlang einer der beiden Längsseiten 12a, 12b des Sitzteiles 12 und sind an der Sitzschale 13 gelagert. Durch Betätigung eines den Gewindespindeln 318, 319 zugeordneten (in den Figuren 13a und 13b nicht dargestellten) Antriebsmotors, der eine Drehbewegung der Gewindespindeln 318, 319 erzeugt, wird eine Längsbewegung der darauf angeordneten Spindelmuttern 268, 269 und damit des Verstellabschnittes 26 des Sicherungselementes 2 hervorgerufen. Dieses kann dann aus der in den Figuren 13a und 13b dargestellten Ausgangslage heraus nach vorne in eine Position bewegt werden, in der es das Durchrutschen eines Fahrzeuginsassen verhindert. Die Rückführung des Verstellabschnittes 26 in die Ausgangslage erfolgt dann durch Umkehrung der Drehrichtung des Antriebsmotors und damit auch der Gewindespindeln 318, 319.

Dabei kann wahlweise jeder GevAndesplndel 318, 319 ein eigener Antriebsmotor zugeordnet sein oder es wird ein gemeinsamer Motor verwendet, der über geeignete Getriebeelemente (z. B. über einen Zahnriemen) mit der jeweiligen Gewindespindel 318, 319 gekoppelt ist.

## Patentansprüche

1. Sicherheitsvorrichtung für einen Kraftfahrzeugsitz (1) mit
- einer Sitzfläche (10), die sich entlang einer Sitzlängsrichtung (X) erstreckt,
- einem der Sitzfläche (10) zugeordneten und unterhalb der Sitzfläche (10) angeordneten Sicherungselement (2) und
- einer mit dem Sicherungselement (2) in Wirkverbindung stehenden Antriebseinrichtung (3), die in einem Crash-Fall aktiviert wird, um das Sicherungselement (2) in einem Crash-Fall aus einer Ausgangslage heraus zu bewegen, wobei das Sicherungselement (2) derart auf die Sitzfläche (10) einwirkt, ohne deren räumliche Lage zu verändern, dass die Sitzfläche (10) und das Sicherungselement (2) dem Vorverlagern des Beckens einer auf der Sitzfläche (10) sitzenden Person in Sitzlängsrichtung (X) entgegenwirken,
**dadurch gekennzeichnet,**
**dass** das Sicherungselement (2) in einem Crash-Fall mittels der Antriebseinrichtung (3) durch eine Bewegung in Richtung auf die Sitzfläche (10) näher an die Sitzfläche (10) herangeführt wird,
die Antriebseinrichtung (3) Mittel (31,30',31") zum Rückführen des Sicherungselements (2) in die Ausgangslage aufweist, so dass nach dem Rückführen des Sicherungselementes (2) in die Ausgangslage ein erneutes Bewegen des Sicherungselementes (2) in einem erneuten Crash-Fall gewährleistet ist, und
die Antriebseinrichtung (3) eine Motorvorrichtung (31) umfasst, die in einem Crash-Fall der Bewegung des Sicherungselementes (2) aus der Ausgangslage heraus dient und/oder die zum Rückführen des Sicherungselementes (2) in die Ausgangslage dient.

2. Sicherheitsvorrichtung gemäß Anspruch 1, **dadurch gekennzeichnet, dass** das Sicherungselement (2) und die Sitzfläche (10) bei einer mit einem Sicherheitsgurt auf dem Fahrzeugsitz (1) angeschnallten Person einem Durchrutschen des Beckens (B) der Person in Sitzlängsrichtung (X) unter einem im Bereich des Beckens (B) angeordneten Abschnitt (4) des Sicherheitsgurtes hindurch entgegenwirken.

3. Sicherheitsvorrichtung gemäß einem der vorhergehenden Ansprüche, **dadurch gekennzeichnet, dass** die Antriebseinrichtung (3) eine lösbare Sperre (32) aufweist, die eine Rückführbewegung des Sicherungselements (2) in die Ausgangslage sperrt.

4. Sicherheitsvorrichtung gemäß einem der vorhergehenden Ansprüche, **dadurch gekennzeichnet, dass** die Mittel zum Rückführen des Sicherungselements (2) in die Ausgangslage eine Federeinrichtung (31") aufweisen.

5. Sicherheitsvorrichtung gemäß einem der vorhergehenden Ansprüche, **dadurch gekennzeichnet, dass** die Mittel zum Rückführen des Sicherungselements (2) in die Ausgangslage eine Motorvorrichtung (31) umfassen.

6. Sicherheitsvorrichtung gemäß einem der vorhergehenden Ansprüche, **dadurch gekennzeichnet, dass** die Antriebseinrichtung (3) ein Federelement (33) zur Bewegung des Sicherungselements (2) in einem Crash-Fall aufweist.

7. Sicherheitsvorrichtung gemäß einem der vorhergehenden Ansprüche, **dadurch gekennzeichnet, dass** die Antriebseinrichtung (3) eine Motorvorrichtung (31) zur Bewegung des Sicherungselementes (2) aus der Ausgangslage in einem Crash-Fall aufweist.

8. Sicherheitsvorrichtung gemäß Anspruch 5 und 7, **dadurch gekennzeichnet, dass** die Motorvorrichtung (31) sowohl zur Realisierung der Bewegung des Sicherungselements (2) in einem Crash-Fall als auch zum Rückführen des Sicherungselements (2) in die Ausgangslage dient.

9. Sicherheitsvorrichtung gemäß einem der Ansprüche 5, 7 und 8, **dadurch gekennzeichnet, dass** die Motorvorrichtung (31) ein Getriebe (34) zur Übertragung, vorzugsweise auch Übersetzung, einer von der Motorvorrichtung (31) erzeugten Kraft auf das Sicherungselement (2) aufweist.

10. Sicherheitsvorrichtung nach Anspruch 9, **dadurch gekennzeichnet, dass** das Getriebe (211, 212, 311, 312; 316, 317) als Zahngetriebe ausgebildet ist.

11. Sicherheitsvorrichtung nach Anspruch 9, **dadurch gekennzeichnet, dass** das Getriebe als Spindelgetriebe (268, 269, 318, 319) ausgebildet ist.

12. Sicherheitsvorrichtung nach Anspruch 9, **dadurch gekennzeichnet, dass** das Getriebe eine Hebelanordnung (213, 214) umfasst.

13. Sicherheitsvorrichtung nach Anspruch 9, **dadurch gekennzeichnet, dass** das Getriebe einen Riemen (316) umfasst.

14. Sicherheitsvorrichtung nach Anspruch 9, **dadurch gekennzeichnet, dass** das Getriebe ein flexibles Zugmittel (38) umfasst.

15. Sicherheitsvorrichtung gemäß einem der vorangehenden Ansprüche, **dadurch gekennzeichnet, dass** sich das Sicherungselement (2) mit einem Verstellabschnitt (26) unterhalb der Sitzfläche (10) im Wesentlichen senkrecht zur Sitzlängsrichtung (X) erstreckt.

16. Sicherheitsvorrichtung gemäß Anspruch 9, **dadurch gekennzeichnet, dass** das Sicherungselement an einer Sitzschale (13) des Kraftfahrzeugsitzes (1) anzuordnen ist.

17. Sicherheitsvorrichtung gemäß einem der vorangehenden Ansprüche, **dadurch gekennzeichnet, dass** das Sicherungselement (2) im Crash-Fall translatorisch in Richtung der Sitzfläche (10) bewegbar ist.

18. Sicherheitsvorrichtung gemäß einem der vorhergehenden Ansprüche, **dadurch gekennzeichnet, dass** das Sicherungselement (2) im Crash-Fall rotatorisch in Richtung der Sitzfläche (10) bewegbar ist.

19. Sicherheitsvorrichtung gemäß Anspruch 17 und 18, **dadurch gekennzeichnet, dass** das Sicherungselement (2) im Crash-Fall translatorisch und rotatorisch in Richtung der Sitzfläche (10) bewegbar ist.

20. Sicherheitsvorrichtung nach einem der vorhergehenden Ansprüche, **dadurch gekennzeichnet, dass** das Sicherungselement (2) einen Verstellabschnitt (26) aufweist, der der Vorverlagerung des Beckens (B) einer auf der Sitzfläche (10) sitzenden Person entgegenwirkt, wenn das Sicherungselement (2) mittels der Antriebseinrichtung (3) aus seiner Ausgangslage heraus bewegt worden ist.

21. Sicherheitsvorrichtung nach einem der vorhergehenden Ansprüche, **dadurch gekennzeichnet, dass** das Sicherungselement (2) mindestens einen Abschnitt (24, 24', 20, 211, 212, 243, 244, 246, 247, 248, 249) aufweist, mittels dem das Sicherungselement (2) entlang seiner Bewegungsrichtung geführt ist.

22. Sicherheitsvorrichtung gemäß einem der vorhergehenden Ansprüche, **dadurch gekennzeichnet, dass** das Sicherungselement (2) im Wesentlichen strangförmig mit zwei Endabschnitten (24,24') ausgebildet ist.

23. Sicherheitsvorrichtung gemäß Anspruch 22, **dadurch gekennzeichnet, dass** die Endabschnitte (24, 24') des Sicherungselements (2) in am Kraftfahrzeugsitz (1) vorgesehenen Führungsstrukturen (35,35') für eine translatorische Bewegung des Sicherungselementes (2) im Crash-Fall angeordnet sind.

24. Sicherheitsvorrichtung gemäß Anspruch 22 oder 23, **dadurch gekennzeichnet, dass** an jedem Endabschnitt (24,24') des Sicherungselements (2) eine Motorvorrichtung (31,31') angeordnet ist.

25. Sicherheitsvorrichtung gemäß einem der Ansprüche 1 bis 21, **dadurch gekennzeichnet, dass** das Sicherungselement (2) bügelförmig mit zwei Endabschnitten (24,24') ausgebildet ist.

26. Sicherheitsvorrichtung gemäß Anspruch 25, **dadurch gekennzeichnet, dass** sich zwischen den beiden Endabschnitten (24,24') ein geradliniger Schwenkabschnitt (26) erstreckt.

27. Sicherheitsvorrichtung gemäß Anspruch 25 oder 26, **dadurch gekennzeichnet, dass** das Sicherungselement (2) mit beiden Endabschnitten (24,24') schwenkbar am Fahrzeugsitz (1) angelenkt ist.

28. Sicherheitsvorrichtung gemäß einem der Ansprüche 25 bis 27, **dadurch gekennzeichnet, dass** im Bereich mindestens eines Endabschnittes (24,24') des Sicherungselements (2) eine Motorvorrichtung (31) angeordnet ist.

29. Sicherheitsvorrichtung gemäß einem der vorhergehenden Ansprüche, **dadurch gekennzeichnet, dass** die Antriebseinrichtung (3) ein strangförmiges Zugmittel (37) aufweist und das Sicherungselement (2) mittels des strangförmigen Zugmittels (37) mit der Motorvorrichtung (31) in Wirkverbindung steht.

30. Sicherheitsvorrichtung gemäß Anspruch 29, **dadurch gekennzeichnet, dass** das strangförmige Zugmittel (37) zwischen Sicherungselement (2) und Motorvorrichtung (31) über mindestens ein Umlenkelement (39) geführt ist.

31. Sicherheitsvorrichtung gemäß Anspruch 29 oder 30, **dadurch gekennzeichnet, dass** die Antriebseinrichtung (3) ein zweites strangförmiges Zugmittel (37') aufweist, das zwischen der Motorvorrichtung (31) und einem Endabschnitt (44) eines am Kraftfahrzeugsitz vorgesehenen Beckengurtes (3) derart angeordnet ist, dass die Motorvorrichtung (31) in einem Crash-Fall während der Bewegung des Sicherungselementes (2) eine Straffung des Beckengurtes (4) zur Sitzfläche (10) hin realisiert.

32. Sicherheitsvorrichtung gemäß einem der Ansprüche 29 bis 31, **dadurch gekennzeichnet, dass** sich die strangförmigen Zugmittel (37,37') mittels der Motorvorrichtung (21) aufwickeln lassen.

33. Sicherheitsvorrichtung gemäß einem der Ansprüche 29 bis 31, **dadurch gekennzeichnet, dass** sich die strangförmigen Zugmittel (37,37') mittels der Motorvorrichtung (31) translatorisch bewegen lassen.

34. Sicherheitsvorrichtung gemäß Anspruch 29, **dadurch gekennzeichnet, dass** das strangförmige Zugmittel (37) mit seinem ersten Ende am Sicherungselement (2) und mit seinem zweiten Ende über mindestens ein Umlenkelement (39) an einem Endabschnitt (44) eines am Kraftfahrzeugsitz (1) vorgesehenen Beckengurtes (4) derart befestigt ist, dass die Bewegung des Sicherungselementes (2) im Crash-Fall den Beckengurt (4) gleichzeitig über das strangförmige Zugmittel (37) zur Sitzfläche (10) hin strafft.

35. Sicherheitsvorrichtung gemäß einem der vorangehenden Ansprüche, **dadurch gekennzeichnet, dass** das Sicherungselement (2) derart plastisch verformbar ausgebildet ist, dass es im Crash-Fall in Wechselwirkung mit dem Becken (B) der auf der Sitzfläche (10) sitzenden Person als energieabsorbierendes Element wirkt.

36. Sicherheitsvorrichtung gemäß Anspruch 35, **dadurch gekennzeichnet, dass** die plastische Verformung des Sicherungselements (2) im Crash-Fall im Wesentlichen entlang der Sitzlängsrichtung (X) erfolgt.

37. Sicherheitsvorrichtung gemäß einem der vorangehenden Ansprüche, **dadurch gekennzeichnet, dass** die Antriebseinrichtung (3) durch Signale eines Crashsensors in einem Kraftfahrzeug ansteuerbar ist.

38. Sicherheitsvorrichtung nach einem der vorhergehenden Ansprüche, **dadurch gekennzeichnet, dass** ein Antriebsmotor (31) der Antriebseinrichtung (3) mittig zwischen zwei Längsseiten (12a, 12b) der Sitzfläche (10) angeordnet ist.

39. Sicherheitsvorrichtung nach einem der Ansprüche 1 bis 37, **dadurch gekennzeichnet, dass** an jeder Längsseite (12a, 12b) der Sitzfläche (10) jeweils ein Antriebsmotor der Antriebseinrichtung (3) angeordnet ist.

## Claims

1. Safety device for a motor vehicle seat (1), having
- a seat surface (10) which extends along a longitudinal direction (X) of the seat,
- a securing element (2) assigned to the seat surface (10) and arranged below the seat surface (10), and
- a drive device (3) which is operatively connected to the securing element (2) and is activated in a crash situation, in order, in a crash situation, to move the securing element (2) out of a starting position, the securing element (2) acting on the seat surface (10), without changing the spatial position thereof, in such a manner that the seat surface (10) and the securing element (2) oppose the forward displacement of the pelvis of a person sitting on the seat surface (10) in the longitudinal direction (X) of the seat,
**characterized**
**in that**, the securing element in a crash situation, is brought closer to the seat surface (10) by means of the drive device (3), by a movement in the direction of the seat surface (10),
the drive device (3) has means (30, 30', 31") for returning the securing element (2) into the starting position, so that after the securing element (2) is returned into the starting position, a new movement of the securing element (2) in a new crash situation is ensured and
the drive device (3) has a motor device (31) which serves for moving the securing element (2) out of the starting position in a crash situation and/or for returning the securing element (2) into the starting position.

2. Safety device according to Claim 1, **characterized in that** when a person is buckled up on the vehicle seat (1) by means of a seat belt, the securing element (2) and the seat surface (10) oppose a slipping of the person's pelvis (B) in the longitudinal direction (X) of the seat under a section (4) of the seat belt that is arranged in the region of the pelvis (B).

3. Safety device according to one of the preceding claims, **characterized in that** the drive device (3) has a releasable latch (32) which blocks a return movement of the securing element (2) into the starting position.

4. Safety device according to one of the preceding claims, **characterized in that** the means for returning the securing element (2) into the starting position have a spring device (31").

5. Safety device according to one of the preceding claims, **characterized in that** the means for returning the securing element (2) into the starting position comprise a motor device (31).

6. Safety device according to one of the preceding claims, **characterized in that** the drive device (3) has a spring element (33) for moving the securing element (2) in a crash situation.

7. Safety device according to one of the preceding claims, **characterized in that** the drive device (3) has a motor device (31) for moving the securing element (2) out of the starting position in a crash situation.

8. Safety device according to Claims 5 and 7, **characterized in that** the motor device (31) serves both for realizing the movement of the securing element (2) in a crash situation and for returning the securing element (2) into the starting position.

9. Safety device according to one of Claims 5, 7 and 8, **characterized in that** the motor device (31) has a gear (34) for the transmission,
preferably also stepping-up, of a force produced by the motor device (31) to the securing element (2).

10. Safety device according to Claim 9, **characterized in that** the gear (211, 212, 311, 312; 316, 317) is designed as a toothed gear.

11. Safety device according to Claim 9, **characterized in that** the gear is designed as a spindle gear (268, 269, 318, 319).

12. Safety device according to Claim 9, **characterized in that** the gear comprises a lever arrangement (213, 214).

13. Safety device according to Claim 9, **characterized in that** the gear comprises a belt (316).

14. Safety device according to Claim 9, **characterized in that** the gear comprises a flexible traction means (38).

15. Safety device according to one of the preceding claims, **characterized in that** the securing element (2) extends essentially perpendicularly to the longitudinal direction (X) of the seat with a displaceable section (26) below the seat surface (10).

16. Safety device according to Claim 9, **characterized in that** the securing element is to be arranged on a seat shell (13) of the motor vehicle seat (1).

17. Safety device according to one of the preceding claims, **characterized in that** the securing element (2) can be moved in the direction of the seat surface (10) in a translatory manner in a crash situation.

18. Safety device according to one of the preceding claims, **characterized in that** the securing element (2) can be moved in the direction of the seat surface (10) in a rotatory manner in a crash situation.

19. Safety device according to Claims 17 and 18, **characterized in that** the securing element (2) can be moved in the direction of the seat surface (10) in a translatory and rotatory manner in a crash situation.

20. Safety device according to one of the preceding claims, **characterized in that** the securing element (2) has a displaceable section (26) which opposes the forward displacement of the pelvis (B) of a person sitting on the seat surface (10) if the securing element (2) has been moved out of its starting position by means of the drive device (3).

21. Safety device according to one of the preceding claims, **characterized in that** the securing element (2) has at least one section (24, 24', 20, 211, 212, 243, 244, 246, 247, 248, 249) by means of which the securing element (2) is guided along its direction of movement.

22. Safety device according to one of the preceding claims, **characterized in that** the securing element (2) is of essentially strand-shaped design with two end sections (24, 24').

23. Safety device according to Claim 22, **characterized in that** the end sections (24, 24') of the securing element (2) are arranged in guide structures (35, 35') which are provided on the motor vehicle seat (1) and are intended for a translatory movement of the securing element (2) in a crash situation.

24. Safety device according to Claim 22 or 23, **characterized in that** a motor device (31, 31') is arranged on each end section (24, 24') of the securing element (2).

25. Safety device according to one of Claims 1 to 21, **characterized in that** the securing element (2) is of bow-shaped design with two end sections (24, 24').

26. Safety device according to Claim 25, **characterized in that** a rectilinear pivoting section (26) extends between the two end sections (24, 24').

27. Safety device according to Claim 25 or 26, **characterized in that** the securing element (2) is coupled pivotably to the vehicle seat (1) by both end sections (24, 24').

28. Safety device according to one of Claims 25 to 27, **characterized in that** a motor device (31) is arranged in the region of at least one end section (24, 24') of the securing element (2).

29. Safety device according to one of the preceding claims, **characterized in that** the drive device (3) has a strand-shaped traction means (37) and the securing element (2) is operatively connected to the motor device (31) by means of the strand-shaped traction means (37).

30. Safety device according to Claim 29, **characterized in that** the strand-shaped traction means (37) between the securing element (2) and motor device (31) is guided via at least one deflecting element (39).

31. Safety device according to Claim 29 or 30, **characterized in that** the drive device (3) has a second strand-shaped traction means (37') which is arranged between the motor device (31) and an end section (44) of a lap belt (3), which is provided on the motor vehicle seat, in such a manner that, in a crash situation, the motor device (31) brings about a tensioning of the lap belt (4) toward the seat surface (10) during the movement of the securing element (2).

32. Safety device according to one of Claims 29 to 31, **characterized in that** the strand-shaped traction means (37, 37') can be wound up by means of the motor device (21).

33. Safety device according to one of Claims 29 to 31, **characterized in that** the strand-shaped traction means (37, 37') can be moved in a translatory manner by means of the motor device (31).

34. Safety device according to Claim 29, **characterized in that** the strand-shaped traction means (37) is fastened by its first end to the securing element (2) and by its second end, via at least one deflecting element (39), to an end section (44) of a lap belt (4), which is provided on the motor vehicle seat (1), in such a manner that, in a crash situation, the movement of the securing element (2) simultaneously tensions the lap belt (4) toward the seat surface (10) via the strand-shaped traction means (37).

35. Safety device according to one of the preceding claims, **characterized in that** the securing element (2) is of plastically deformable design in such a manner that, in a crash situation, it acts, in interaction with the pelvis (B) of the person sitting on the seat surface (10), as an energy-absorbing element.

36. Safety device according to Claim 35, **characterized in that** the plastic deformation of the securing element (2) in a crash situation takes place essentially along the longitudinal direction (X) of the seat.

37. Safety device according to one of the preceding claims, **characterized in that** the drive device (3) can be activated by signals of a crash sensor in a motor vehicle.

38. Safety device according to one of the preceding claims, **characterized in that** a drive motor (31) of the drive device (3) is arranged centrally between two longitudinal sides (12a, 12b) of the seat surface (10).

39. Safety device according to one of Claims 1 to 37, **characterized in that** a drive motor of the drive device (3) is arranged in each case on each longitudinal side (12a, 12b) of the seat surface (10).

## Revendications

1. Dispositif de sécurité pour un siège de véhicule (1) avec
- une surface de siège (10) qui s'étend le long d'un sens longitudinal du siège (X)
- un élément de sécurité (2) affecté à la surface de siège (10) et disposé en dessous de la surface de siège (10)
- un dispositif d'entraînement (3) qui est en liaison active avec l'élément de sécurité (2) et est activé en cas d'accident afin de faire sortir l'élément de sécurité (2) d'une position initiale en cas d'accident, l'élément de sécurité (2) agissant sur la surface du siège (10) de telle manière que, sans modifier sa position dans l'espace, la surface de siège (10) et l'élément de sécurité (2) contrecarrent le déplacement vers l'avant du bassin d'une personne assise sur la surface de siège (10) dans le sens longitudinal du siège (X),
**caractérisé en ce que**
en cas d'accident, l'élément de sécurité (2) est rapproché de la surface du siège (10) par un mouvement vers la surface de siège (10) au moyen du dispositif d'entraînement (3),
le dispositif d'entraînement (3) comporte des moyens (31, 30', 31") pour faire retourner l'élément de sécurité (2) dans la position initiale, si bien qu'après le retour de l'élément de sécurité (2) dans la position initiale un nouveau mouvement de l'élément de sécurité (2) est garanti en cas de nouvel accident et
le dispositif d'entraînement (3) comprend un dispositif à moteur (31) qui sert, en cas d'accident, à assurer le mouvement de l'élément de sécurité (2) à partir de la position initiale et/ou sert pour faire retourner l'élément de sécurité (2) dans la position initiale.

2. Dispositif de sécurité selon la revendication 1, **caractérisé en ce que** l'élément de sécurité (2) et la surface de siège (10) contrecarrent, chez une personne attachée sur le siège du véhicule (1) avec une ceinture de sécurité, un glissement du bassin (B) de la personne dans le sens longitudinal du siège (X) par-dessous une section (4) de la ceinture de sécurité disposée dans la zone du bassin (B).

3. Dispositif de sécurité selon une des revendications précédentes, **caractérisé en ce que** le dispositif d'entraînement (3) comporte un dispositif de blocage amovible (32) qui bloque un mouvement de retour de l'élément de sécurité (2) dans la position initiale.

4. Dispositif de sécurité selon une des revendications précédentes, **caractérisé en ce que** les moyens pour faire retourner l'élément de sécurité (2) dans la position initiale comportent un dispositif à ressort (31").

5. Dispositif de sécurité selon une des revendications précédentes, **caractérisé en ce que** les moyens pour faire retourner l'élément de sécurité (2) dans la position initiale comportent un dispositif à moteur (31).

6. Dispositif de sécurité selon une des revendications précédentes, **caractérisé en ce que** le dispositif d'entraînement (3) comporte un élément à ressort (33) pour assurer le mouvement de l'élément de sécurité (2) en cas d'accident.

7. Dispositif de sécurité selon une des revendications précédentes, **caractérisé en ce que** le dispositif d'entraînement (3) comporte un dispositif à moteur (31) pour assurer le mouvement de l'élément de sécurité (2) à partir de la position initiale en cas d'accident.

8. Dispositif de sécurité selon les revendications 5 et 7, **caractérisé en ce que** le dispositif à moteur (31) sert non seulement à réaliser le mouvement de l'élément de sécurité (2) en cas d'accident, mais encore à faire retourner l'élément de sécurité (2) dans la position initiale.

9. Dispositif de sécurité selon une des revendications 5, 7 et 8, **caractérisé en ce que** le dispositif à moteur (31) comporte un engrenage (34) pour la transmission, de préférence également la multiplication, d'une force générée par le dispositif à moteur (31) sur l'élément de sécurité (2).

10. Dispositif de sécurité selon la revendication 9, **caractérisé en ce que** l'engrenage (211, 212, 311, 312,316, 317) est réalisé sous forme d'engrenage denté.

11. Dispositif de sécurité selon la revendication 9, **caractérisé en ce que** l'engrenage est réalisé sous forme d'engrenage à broche (268, 269, 318, 319).

12. Dispositif de sécurité selon la revendication 9, **caractérisé en ce que** l'engrenage comprend un dispositif à leviers (213, 214).

13. Dispositif de sécurité selon la revendication 9, **caractérisé en ce que** l'engrenage comprend une courroie (316).

14. Dispositif de sécurité selon la revendication 9, **caractérisé en ce que** l'engrenage comprend un moyen de traction flexible (38).

15. Dispositif de sécurité une des revendications précédentes, **caractérisé en ce que** l'élément de sécurité (2) s'étend avec une section réglable (26) en dessous de la surface de siège (10) pour l'essentiel perpendiculairement au sens longitudinal du siège (X).

16. Dispositif de sécurité selon la revendication 9, **caractérisé en ce que** l'élément de sécurité doit être disposé sur une coquille de siège (13) du siège de véhicule (1).

17. Dispositif de sécurité selon une des revendications précédentes, **caractérisé en ce que** l'élément de sécurité (2) peut, en cas d'accident, se déplacer par translation vers la surface de siège (10).

18. Dispositif de sécurité selon une des revendications précédentes, **caractérisé en ce que** l'élément de sécurité (2) peut, en cas d'accident, se déplacer par rotation vers la surface de siège (10).

19. Dispositif de sécurité selon les revendications 17 et 18, **caractérisé en ce que** l'élément de sécurité (2) peut, en cas d'accident, se déplacer par translation et par rotation vers la surface de siège (10).

20. Dispositif de sécurité selon une des revendications précédentes, **caractérisé en ce que** l'élément de sécurité (2) comporte une section réglable (26) qui contrecarre le déplacement vers l'avant du bassin (B) d'une personne assise sur la surface de siège (10) lorsque l'élément de sécurité (2) a été déplacé à partir de sa position initiale au moyen du dispositif d'entraînement (3).

21. Dispositif de sécurité selon une des revendications précédentes, **caractérisé en ce que** l'élément de sécurité (2) comporte au moins une section (24, 24', 20, 211, 212, 243, 244, 246, 247, 248, 249), au moyen de laquelle l'élément de sécurité (2) est guidé le long de sa direction de mouvement.

22. Dispositif de sécurité selon une des revendications précédentes, **caractérisé en ce que** l'élément de sécurité (2) est essentiellement réalisé en forme de tube avec deux sections d'extrémité (24, 24').

23. Dispositif de sécurité selon la revendication 22, **caractérisé en ce que** les sections d'extrémité (24, 24') de l'élément de sécurité (2) sont disposées dans des structures de guidage (35, 35') prévues sur le siège de véhicule (1) pour un mouvement de translation de l'élément de sécurité (2) en cas d'accident.

24. Dispositif de sécurité selon la revendication 22 ou 23, **caractérisé en ce qu'**un dispositif à moteur (31, 31') est disposé sur chaque section d'extrémité (24, 24') de l'élément de sécurité (2).

25. Dispositif de sécurité selon une des revendications 1 à 21, **caractérisé en ce que** l'élément de sécurité (2) est réalisé en forme d'étrier avec deux sections d'extrémité (24, 24').

26. Dispositif de sécurité selon la revendication 25, **caractérisé en ce qu'**une section de pivotement rectiligne (26) s'étend entre les deux sections d'extrémité (24, 24').

27. Dispositif de sécurité selon la revendication 25 ou 26, **caractérisé en ce que** l'élément de sécurité (2) est articulé sur le siège de véhicule (1) avec les deux sections d'extrémité (24, 24') de manière à pouvoir pivoter.

28. Dispositif de sécurité selon une des revendications 25 à 27, **caractérisé en ce qu'**un dispositif à moteur (31) est disposé dans la zone d'au moins une section d'extrémité (24, 24') de l'élément de sécurité (2).

29. Dispositif de sécurité selon une des revendications précédentes, **caractérisé en ce que** le dispositif d'entraînement (3) comporte un moyen de traction (37) en forme de tube et **en ce que** l'élément de sécurité (2) est en liaison active avec le dispositif à moteur (31) au moyen du moyen de traction (37) en forme de tube.

30. Dispositif de sécurité selon la revendication 29, **caractérisé en ce que** le moyen de traction en forme de tube (37) est guidé entre l'élément de sécurité (2) et le dispositif à moteur (31) via au moins un élément de déviation (39).

31. Dispositif de sécurité selon la revendication 29 ou 30, **caractérisé en ce que** le dispositif d'entraînement (3) comporte un deuxième moyen de traction en forme de tube (37') qui est disposé entre le dispositif à moteur (31) et une section d'extrémité (44) d'une ceinture de bassin (3) prévue sur le siège de véhicule de telle manière que, en cas d'accident, le dispositif à moteur (31) réalise pendant le mouvement de l'élément de sécurité (2) une tension de la ceinture de bassin (4) en direction de la surface de siège (10).

32. Dispositif de sécurité selon une des revendications 29 à 31, **caractérisé en ce que** les moyens de traction en forme de tube (37, 37') peuvent être enroulés au moyen du dispositif à moteur (21).

33. Dispositif de sécurité selon une des revendications 29 à 31, **caractérisé en ce que** les moyens de traction en forme de tube (37, 37') peuvent être déplacés par translation au moyen du dispositif à moteur (31).

34. Dispositif de sécurité selon la revendication 29, **caractérisé en ce que** le moyen de traction en forme de tube (37) est fixé avec sa première extrémité à l'élément de sécurité (2) et avec sa deuxième extrémité via au moins un élément de déviation (39) à une section d'extrémité (44) d'une ceinture de bassin (4) prévue sur le siège de véhicule (1), de telle manière que, en cas d'accident, le mouvement de l'élément de sécurité (2) tend simultanément la ceinture de bassin (4) vers la surface de siège (10) via le moyen de traction en forme de tube (37).

35. Dispositif de sécurité selon une des revendications précédentes, **caractérisé en ce que** l'élément de sécurité (2) est réalisé de manière à pouvoir subir une déformation plastique telle qu'en cas d'accident, il agit comme élément d'absorption d'énergie par interaction avec le bassin (B) de la personne assise sur la surface de siège (10).

36. Dispositif de sécurité selon la revendication 35, **caractérisé en ce que** la déformation plastique de l'élément de sécurité (2) en cas d'accident a essentiellement lieu le long du sens longitudinal du siège (X).

37. Dispositif de sécurité selon une des revendications précédentes, **caractérisé en ce que** le dispositif d'entraînement (3) peut être amorcé par des signaux d'un capteur d'accident dans un véhicule.

38. Dispositif de sécurité selon une des revendications précédentes, **caractérisé en ce qu'**un moteur d'entraînement (31) du dispositif d'entraînement (3) est disposé au milieu entre deux côtés longitudinaux (12a, 12b) de la surface de siège (10).

39. Dispositif de sécurité selon une des revendications 1 à 37, **caractérisé en ce qu'**un moteur d'entraînement du dispositif d'entraînement (3) est disposé sur chaque côté longitudinal (12a, 12b) de la surface de siège (10).
